# EUROPÄISCHE PATENTSCHRIFT

(11) **EP 2 996 968 B1**
(45) Veröffentlichungstag und Bekanntmachung des Hinweises auf die Patenterteilung: **18.10.2017**
(21) Anmeldenummer: 13802898.0
(22) Anmeldetag: 14.11.2013
(51) Int. Cl.: B65G 19/14, B65G 19/26, B65G 35/08, B65G 19/22

(54) **FÖRDERELEMENT UND FÖRDEREINRICHTUNG ZUR FÖRDERUNG VON SCHÜTTGUT**
TRANSPORT DEVICE, ACTUATOR AND TRACTION DEVICE FOR TRANSPORTING BULK GOODS
ENTRAÎNEUR, ÉLÉMENT DE TRACTION ET CONVOYEUR DESTINÉS AU TRANSPORT DE PRODUITS EN VRAC

(30) Priorität: 15.05.2013 WO PCT/EP2013/060046
(43) Veröffentlichungstag der Anmeldung: 23.03.2016
(73) Patentinhaber: Bühler GmbH, 92339 Beilngries (DE)
(72) Erfinder: KAMPS, Rolf, 8134 Adliswil (CH); KAUFMANN, Christof, 9244 Niederuzwil (CH)
(74) Vertreter: Vossius & Partner Patentanwälte Rechtsanwälte mbB
(86) Internationale Anmeldenummer: PCT/EP2013/073826
(87) Internationale Veröffentlichungsnummer: WO 2014/183811

(56) Entgegenhaltungen:
- DE-U1- 9 307 490
- US-A- 2 601 248
- US-A- 4 197 938
- US-A- 4 724 772
- US-A- 5 147 029
- US-A1- 2007 170 043
- US-A1- 2007 258 773

## Beschreibung

Die Erfindung betrifft eine Fördereinrichtung und ein Förderelement (einen Mitnehmer) zum Fördern von Schüttgut.

Derartige Fördereinrichtungen, die geeignet sind zur Förderung von Schüttgut wie beispielsweise Reis, Mehl, Weizen oder Mais entlang unter anderem gekrümmter Rohre von einem Einlass für das Schüttgut zu einem Auslass für das Schüttgut, sind aus dem Stand der Technik als Rohrkettenförderer bzw. Stauscheibenförderer bekannt.

Aus der US 4,197,938 ist ein Förderer für Schüttgut umfassend scheibenartige Mitnehmer bekannt. Die Mitnehmer sind an einem Seil angeordnet, wobei das Seil umfassend die Mitnehmer mittels eines Zahnrads antreibbar ist zur Förderung des Schüttguts unter anderem entlang gekrümmter Rohrabschnitte von einem Einlass zu einem Auslass.

Diese vorbekannte Fördereinrichtung für Schüttgut weist den Nachteil auf, dass beispielsweise bei einer Beschädigung der Mitnehmer im Betrieb deren Austausch aufwändig ist, was die Wartungskosten erhöht und den mittleren Durchsatz an Schüttgut durch die Fördereinrichtung verringert. Zudem ist bei der Verwendung eines Seils als Zugelement mit daran montierten Mitnehmern eine Längenanpassung beispielsweise bei Verkürzung oder Verlängerung der Fördereinrichtung aufwändig. Zudem weist die vorbekannte Fördereinrichtung den Nachteil auf, dass ein Füllgrad der Fördereinrichtung nicht einstellbar ist.

Aus der NL 1025855 ist eine Fördereinrichtung mit mehreren Mitnehmern bekannt, die ein elektrisch leitfähiges und/oder magnetisches Material enthalten.

Dokument US2007/170043A1 offenbart ein Förderelement gemäß dem Oberbegriff des Anspruchs 1. Es ist daher eine Aufgabe der vorliegenden Erfindung, die Nachteile des Bekannten zu vermeiden, insbesondere also ein Förderelement und eine Fördereinrichtung bereitzustellen, mit denen ein zuverlässigerer Betrieb der Fördereinrichtung mit einem geringen Wartungsaufwand ermöglicht wird, wobei die Fördereinrichtung im Betrieb kostengünstig ist. Diese Aufgaben werden durch ein Förderelement (einen Mitnehmer) und eine Fördereinrichtung gemäss den Ansprüchen gelöst.

### Allgemeine Beschreibung des Prinzips einer erfindungsgemäßen Fördereinrichtung

Beispielsweise umfasst eine Fördereinrichtung einen Förderkanal. Der Förderkanal ist insbesondere als ein Förderrohr ausgebildet. Im Förderkanal ist zumindest ein Mitnehmer angeordnet. Insbesondere sind zumindest zwei Mitnehmer im Förderkanal angeordnet. Die Fördereinrichtung weist zumindest einen Antrieb zum Antreiben des zumindest einen Mitnehmers zur Förderung von Schüttgut entlang einer Förderkanalachse auf. Der zumindest eine Mitnehmer ist zumindest abschnittsweise entlang der Förderkanalachse lose im Förderkanal angeordnet.

Unter einer "Fördereinrichtung" wird im Sinne der vorliegenden Anmeldung eine Einrichtung zur insbesondere kontinuierlichen Förderung von Schüttgut verstanden. Unter einer "kontinuierlichen Förderung" von Schüttgut wird im Sinne der vorliegenden Anmeldung insbesondere auch eine derartige Förderung von Schüttgut verstanden, bei der der Schüttgutstrom im Förderkanal abschnittsweise durch Mitnehmer unterbrochen ist.

Unter einem "Förderkanal" wird im Sinne der vorliegenden Anmeldung ein Kanal verstanden, entlang dessen Längsachse Schüttgut förderbar ist. Beispielsweise kann ein Förderkanal als offene Rinne oder als Hohlkörper mit kreisförmigem, dreieckigem,rechteckigem oder quadratischem Querschnitt oder beliebigen anderen Querschnittsformen ausgebildet sein. Insbesondere ist der Förderkanal als Förderrohr mit kreisförmigem Querschnitt senkrecht zur Längsachse des Förderrohrs ausgebildet. Weiter insbesondere ist der Förderkanal umlaufend als geschlossene Schleife ausgebildet.

Unter einer "Förderkanalachse" wird im Sinne der vorliegenden Anmeldung die Längsachse des Förderkanals verstanden, entlang der das Schüttgut bei bestimmungsgemässem Gebrauch gefördert wird.

Unter einem "Mitnehmer" ("Förderelement") wird im Sinne der vorliegenden Anmeldung ein derartiges Element verstanden, mit welchem bei bestimmungsgemässem Gebrauch im Wesentlichen parallel zur Längsachse des Förderkanals Schüttgut förderbar ist durch Positionieren des Mitnehmers, entlang der Längsachse. Insbesondere ist der Mitnehmer in einem Hohlkörper wie beispielsweise einem Förderrohr anordenbar und entlang der Achse des Hohlkörpers positionierbar zur Förderung von Schüttgut entlang der Achse des Hohlkörpers.

Unter dem Begriff "Schüttgut" wird im Sinne der vorliegenden Anmeldung ein körniges, mehliges oder auch stückiges Gut verstanden, das in einer schüttfähigen Form vorliegt und insbesondere fliessfähig ist. Insbesondere werden als Schüttgut Reis, Mehl, Korn, Weizen, Mais, fliessfähige, pulvrige Substanzen und beliebige Kombinationen daraus verstanden.

Unter einer "losen Anordnung eines Mitnehmers zumindest abschnittsweise entlang der Förderkanalachse" wird im Sinne der vorliegenden Anmeldung ein derartiger Mitnehmer verstanden, der in dem Abschnitt nicht mit einem Antrieb direkt verbunden ist; in dem Abschnitt wird ein derartiger Mitnehmer nur durch entlang der Förderkanalachse benachbart angeordnete Mitnehmer und/oder Schüttgut, welches gefördert wird, entlang der Förderkanalachse bewegt; beispielsweise wird in einem Antriebsabschnitt eine Kraft auf einen Mitnehmer im Wesentlichen parallel zur Förderkanalachse ausgeübt, wodurch der Mitnehmer und mit diesem in Kontakt stehendes Schüttgut im Wesentlichen parallel zur Förderkanalachse positioniert, wobei Mitnehmer und/oder Schüttgut ausserhalb des Antriebsabschnitts der Fördereinrichtung entlang der Förderkanalachse bewegt werden.

Unter der Bezeichnung "A und/oder B" werden im Sinne der vorliegenden Anmeldung die folgenden möglichen Kombinationen verstanden: A; B; A und B; A und kein B; B und kein A.

Die Ausgestaltung der Fördereinrichtung mit zumindest einem lose im Förderkanal angeordneten Mitnehmer hat den Vorteil, dass ein Austausch eines beispielsweise beschädigten Mitnehmers einfach erfolgen kann, da der Mitnehmer lose in dem Förderkanal angeordnet ist. Somit wird der Wartungsaufwand verringert und damit der Betrieb der Fördereinrichtung kosteneffizienter. Zudem ist vorteilhaft eine Anpassung an verschiedene Förderkanallängen durch Entnahme oder Hinzufügung eines Mitnehmers.

Insbesondere ist der Förderkanal in zumindest einer Seitenansicht S-förmig ausgebildet. Dies hat den Vorteil, dass eine Platz sparende Anordnung der Fördereinrichtung insbesondere auf lediglich einem Stockwerk ermöglicht wird; im Stand der Technik werden hierfür üblicherweise zwei oder drei Stockwerke benötigt, in denen die Fördereinrichtung angeordnet wird.

Der Förderkanal, insbesondere das Förderrohr, kann zumindest im Antriebsbereich Stahl enthalten oder daraus bestehen.

Bevorzugt ist der Förderkanal als Führungseinrichtung entlang der Förderkanalachse für den Mitnehmer ausgebildet.

Unter einer "Führungseinrichtung" wird im Sinne der vorliegenden Anmeldung eine Einrichtung zur Begrenzung der Bewegung des Mitnehmers im Wesentlichen senkrecht zur Förderkanalachse verstanden.

Diese Ausgestaltung des Förderkanals als Führungseinrichtung für den Mitnehmer hat den Vorteil, dass der Mitnehmer lediglich eine geringe Bewegung senkrecht zur Förderkanalachse durchführen kann, wodurch Beschädigungen des Mitnehmers im Betrieb minimiert werden.

Diese Ausbildung des Förderkanals als Führungseinrichtung kann beispielsweise dadurch erreicht werden, dass der mittlere Querschnitt des Förderkanals entlang der Förderkanalachse im Wesentlichen eine kongruente Form zum mittleren Querschnitt des Mitnehmers entlang der Förderkanalachse aufweist, so dass der Mitnehmer aber noch im Förderkanal einsetzbar ist und in einer Richtung seitlich zur Förderkanalachse wenig Spiel hat.

Besonders bevorzugt ist der Antrieb derart ausgebildet, dass zumindest abschnittsweise eine Kraft im Wesentlichen parallel zur Förderkanalachse durch den Antrieb direkt auf den Mitnehmer ausübbar ist. Der Mitnehmer kann hierfür mindestens eine Antriebsfläche aufweisen, auf den die genannte Kraft ausgeübt werden kann. Vorteilhafterweise ist die Antriebsfläche elastisch ausgebildet und kann beispielsweise aus Kunststoff oder Gummi bestehen oder damit beschichtet sein. Hierdurch kann erreicht werden, dass zwischen dem Antrieb und dem Mitnehmer nicht nur ein punktförmiger Kontakt besteht, sondern ein linienförmiger oder sogar ein flächenförmiger Kontakt. Ferner kann die Antriebsfläche Stahl enthalten oder daraus bestehen.

Unter der Formulierung, dass "eine Kraft direkt ausübbar ist", wird im Sinne der vorliegenden Anmeldung verstanden, dass die Kraft durch den Antrieb auf den entsprechenden Mitnehmer ausgeübt wird und nicht durch zwischen dem Antrieb und Mitnehmer weitere angeordnete Mitnehmer und/oder Schüttgut.

Diese Ausbildung des Antriebs hat den Vorteil, dass die Kraftübertragung auf den Mitnehmer zuverlässig erfolgen kann auch bei loser Anordnung der Mitnehmer.

Ganz besonders bevorzugt greift der Antrieb zumindest in einem Antriebsabschnitt in den Förderkanal ein zur Ausübung einer Kraft im Wesentlichen parallel zur Förderkanalachse auf einen im Antriebsabschnitt angeordneten Mitnehmer.

Dies hat den Vorteil, dass der Antrieb lediglich in einem Teilbereich der Vorrichtung angeordnet werden muss, was die Wartung der Fördereinrichtung erleichtert und die konstruktive Ausgestaltung der Fördereinrichtung vereinfacht.

Insbesondere ist die Gesamtlänge der im Förderkanal angeordneten Mitnehmer kleiner als die Länge der Förderkanalachse. Bevorzugt ist die Gesamtlänge der Mitnehmer grösser als die Länge der Förderkanalachse minus der Länge des zumindest einen Antriebsabschnitts.

Dies hat den Vorteil, dass der Antrieb der Mitnehmer im Förderkanal zuverlässig gewährbar ist.

Unter der "Gesamtlänge" der Mitnehmer wird die wirksame längste Ausdehnung eines Mitnehmers entlang der Förderkanalachse multipliziert mit der Anzahl der im Förderkanal angeordneten Mitnehmer verstanden. Falls die Mitnehmer verschieden ausgebildet sind, so wird unter der "Gesamtlänge" der Mitnehmer die Summe der wirksamen längsten Ausdehnungen der Mitnehmer entlang der Förderkanalachse verstanden.

Bevorzugt ist der Antrieb derart ausgebildet, dass eine Kraft im Wesentlichen im der Innenwand des Förderkanals zugewandten Umfangsbereich des Mitnehmers auf den Mitnehmer ausübbar ist.

Unter der Formulierung, dass "eine Kraft im Wesentlichen im Umfangsbereich des Mitnehmers ausübbar ist, der der Innenwand des Förderkanals zugewandt ist", wird im Sinne der vorliegenden Anmeldung verstanden, dass der Antrieb mit einer Antriebseinrichtung am Mitnehmer zur Kraftausübung angreift, wobei die Antriebseinrichtung einen Abschnitt in Umfangsrichtung des Mitnehmers direkt berührt.

Diese Ausgestaltung hat den Vorteil, dass der Antrieb nur im Bereich der Innenwand in den Förderkanal eingreifen muss, um die Antriebswirkung zu erreichen, wodurch Kollisionen des Antriebs mit anderen Teilen des Mitnehmers oder auch eine Kompression von Schüttgut minimiert werden.

Besonders bevorzugt ist der Antrieb aus der Liste der folgenden Antriebsarten oder beliebigen Kombinationen daraus auswählbar oder ausgewählt: Kettengetriebe, Riementriebe, Koppelgetriebe, Zahnradgetriebe, Schneckengetriebe, Magnetgetriebe, Servoantriebe, Direktantriebe. Das Koppelgetriebe kann beispielsweise als Viergelenkantrieb ausgebildet sein, insbesondere als Geradführungsgetriebe.

Derartige Antriebe sind dem Fachmann an sich bekannt. Vorteilhaft kann der am besten geeignete Antrieb gemäss den Anforderungen sowie beispielsweise den konstruktiven Randbedingungen ausgewählt werden.

Insbesondere wird ein Koppelgetriebe verwendet, das sich im Betrieb als besonders vorteilhaft erwiesen hat.

Insbesondere ist es bei Verwendung eines Magnetantriebs notwendig, das Material für den Mitnehmer entsprechend auszuwählen, so dass durch die durch den Magnetantrieb erzeugten magnetischen Wechselfelder ein Antrieb der Mitnehmer möglich ist.

In einer ersten bevorzugten Variante weist der Antrieb mindestens einen Mitnehmerbolzen auf, mittels dessen zumindest abschnittsweise eine Kraft im Wesentlichen parallel zur Förderkanalachse direkt auf den Mitnehmer ausübbar ist, insbesondere auf eine Antriebsfläche des Mitnehmers. Bevorzugt erstreckt sich der Mitnehmerbolzen zumindest während der Kraftausübung auf den Mitnehmer in einer vertikalen Richtung.

Vorteilhafterweise ist der Antrieb in dieser ersten Variante als Kettengetriebe ausgebildet und weist mindestens ein Antriebskettenpaar auf, wobei jedes von zwei gegenüberliegenden Enden des Mitnehmerbolzens an jeweils einer Antriebskette des Antriebskettenpaars befestigt ist. Im Falle sich vertikal erstreckender Mitnehmerbolzen weist der Antrieb dann mindestens eine untere Antriebskette und mindestens eine obere Antriebskette auf.

Der Antrieb kann nur ein einziges oder mehrere Antriebskettenpaare mit jeweiligen Mitnehmerbolzen aufweisen. In einigen Ausführungsformen der ersten Variante sind die Mitnehmerbolzen seitlich vom Förderkanal angeordnet. Bevorzugt sind die Mitnehmerbolzen eines ersten Antriebskettenpaares an einer ersten Seite des Förderkanals angeordnet, und die Mitnehmerbolzen eines zweiten Antriebskettenpaares sind an einer der ersten Seite gegenüber liegenden zweiten Seite des Förderkanals angeordnet. Auf diese Weise kann ein Verkeilen der Mitnehmer verhindert werden, während die Mitnehmerbolzen eine Kraft auf sie ausüben.

Ebenfalls bevorzugt ist der Abstand zweier benachbarter Mitnehmerbolzen im Wesentlichen identisch mit der Ausdehnung der Mitnehmer entlang der Förderkanalachse. Dies bedeutet, dass der Abstand zweier benachbarter Mitnehmerbolzen mindestens so gross ist wie die Ausdehnung der Mitnehmer entlang der Förderkanalachse und höchstens das 1,5-fache, bevorzugt höchstens das 1,25-fache und besonders bevorzugt höchstens das 1,1-fache dieser Ausdehnung beträgt. Hierdurch kann bewerkstelligt werden, dass die Mitnehmer während des Antreibens einander zumindest beinahe berühren und daher einen möglichst geringen Abstand aufweisen. Bevorzugt ist der Abstand zweier benachbarter Mitnehmerbolzen grösser als die Ausdehnung der Mitnehmer entlang der Förderkanalachse; insbesondere kann das Verhältnis dieser Grössen mindestens 1,01 sein. Auf diese Weise kann ein gewisses Spiel erreicht werden, um Fertigungstoleranzen bzw. Verschleisstoleranzen auszugleichen.

In einer zweiten bevorzugten Variante ist der Antrieb als Kettengetriebe oder Riementrieb ausgebildet und weist mindestens eine Antriebskette auf, die mindestens einen Mitnehmervorsprung enthält. Mittels dieses Mitnehmervorsprungs kann zumindest abschnittsweise eine Kraft im Wesentlichen parallel zur Förderkanalachse direkt auf den Mitnehmer ausübbar sein, insbesondere auf eine Antriebsfläche des Mitnehmers.

Auch in der zweiten Variante kann die Antriebskette seitlich vom Förderkanal angeordnet sein. Es können nur eine einzige oder auch mehrere Antriebsketten vorhanden sein. Beispielsweise kann eine erste Antriebskette mit Mitnehmervorsprüngen an einer ersten Seite des Förderkanals angeordnet sein, und eine zweite Antriebskette mit Mitnehmervorsprüngen kann an einer der ersten Seite gegenüberliegenden zweiten Seite des Förderkanals angeordnet sein. Auch hierdurch kann ein Verkeilen der Mitnehmer verhindert werden, während die Mitnehmerbolzen eine Kraft auf sie ausüben.

Ebenfalls bevorzugt ist der Abstand zweier benachbarter Mitnehmervorsprünge im Wesentlichen identisch mit der Ausdehnung der Mitnehmer entlang der Förderkanalachse. Dies bedeutet, dass der Abstand zweier benachbarter Mitnehmervorsprünge mindestens so gross ist wie die Ausdehnung der Mitnehmer entlang der Förderkanalachse und höchstens das 1,5-fache, bevorzugt höchstens das 1,25-fache und besonders bevorzugt höchstens das 1,1-fache dieser Ausdehnung beträgt. Hierdurch kann ebenso bewerkstelligt werden, dass die Mitnehmer während des Antreibens einander zumindest beinahe berühren und daher einen möglichen geringen Abstand aufweisen. Bevorzugt ist der Abstand zweier benachbarter Mitnehmervorsprünge grösser als die Ausdehnung der Mitnehmer entlang der Förderkanalachse; insbesondere kann das Verhältnis dieser Grössen mindestens 1,01 sein. Auf diese Weise kann ein gewisses Spiel erreicht werden, um Fertigungstoleranzen bzw. Verschleisstoleranzen auszugleichen.

In einer dritten bevorzugten Variante ist der Antrieb als Schneckengetriebe ausgebildet und weist mindestens eine drehbare Antriebsschnecke auf, mittels deren Drehebewegung zumindest abschnittsweise eine Kraft im Wesentlichen parallel zur Förderkanalachse direkt auf den Mitnehmer ausübbar ist, insbesondere auf eine Antriebsfläche des Mitnehmers. Hierfür ist es besonders bevorzugt, wenn sich die Drehachse der Antriebsschnecke im Wesentlichen parallel zur Förderkanalachse erstreckt.

Auch in dieser dritten Variante können nur eine einzige oder auch mehrere drehbare Antriebsschnecken vorhanden sein. Beispielsweise kann eine erste Antriebsschnecke auf einer ersten Seite des Förderkanals angeordnet sein, und eine zweite Förderschnecke kann an einer der ersten Seite gegenüberliegenden zweiten Seite des Förderkanals angeordnet sein.

Ebenfalls bevorzugt ist die Ausdehnung der Mitnehmer entlang der Förderkanalachse im Wesentlichen ein ganzzahliges Vielfaches der Ganghöhe der Antriebsschnecke. Dies bedeutet, dass das Verhältnis aus der Ausdehnung der Mitnehmer entlang der Förderkanalachse und der Ganghöhe der Antriebsschnecke höchstens um 0,4, bevorzugt höchstens um 0,2 und besonders bevorzugt höchstens um 0,1 kleiner ist als eine ganze Zahl, wobei diese ganze Zahl beispielsweise 1, 2, 3, 4, 5 oder 6 sein kann. Beispielsweise könnte also das genannte Verhältnis im Bereich von 3,6 bis 4, bevorzugt von 3,8 bis 4 und besonders bevorzugt von 3,9 bis 4 liegen. Auch hierdurch kann bewerkstelligt werden, dass die Mitnehmer während des Antreibens einander zumindest beinahe berühren und daher einen möglichst geringen Abstand aufweisen. Ebenfalls bevorzugt ist das genannte Verhältnis um mindestens 0,01 kleiner als die genannte ganze Zahl; auf diese Weise kann ein gewisses Spiel erreicht werden, um Fertigungstoleranzen bzw. Verschleisstoleranzen auszugleichen.

Im Falle mehrerer Antriebskettenpaare und/oder Antriebsketten und/oder Antriebsschnecken werden diese bevorzugt zueinander synchronisiert. Dies ist beispielsweise mit einem an sich bekannten Zahnradgetriebe möglich, über welches die Antriebskraft von einem Motor auf mehrere oder alle Antriebsketten und/oder Antriebsschnecken übertragbar ist. Durch eine solche Synchronisierung kann insbesondere gewährleistet werden, dass sich die oben beschriebenen Mitnehmerbolzen zumindest während der Kraftausübung auf den Mitnehmer in einer vertikalen Richtung erstrecken und dass sich mehrere Mitnehmerbolzen, Mitnehmervorsprünge oder Antriebsschnecken mit gleicher Geschwindigkeit bewegen.

Bevorzugt hat der Antriebsabschnitt in Richtung der Förderkanalachse eine Länge, welche mindestens das Doppelte, bevorzugt mindestens das Dreifache der Länge eines Mitnehmers beträgt. Hierdurch kann gewährleistet werden, dass sich zu jedem Zeitpunkt mindestens ein Mitnehmer vollständig im Antriebsabschnitt befindet.

An einer Innenwand des Förderkanals kann mindestens ein Leitelement vorhanden sein, und der Mitnehmer kann ein korrespondierendes Gegenleitelement aufweisen, mittels dessen der Mitnehmer entlang des Leitelements führbar ist. Hierdurch kann ein Verkippen oder Verkeilen des Mitnehmers verhindert werden. Das Leitelement kann beispielsweise als Seitenleitblech ausgebildet sein. Bevorzugt sind an der Innenwand des Förderkanals mindestens zwei und weiter bevorzugt genau zwei einander gegenüberliegende Seitenleitbleche angeordnet.

Wahlweise kann eine Zentrierung der Mitnehmer über die oben beschriebenen Mitnehmerbolzen erfolgen. Die oben beschriebene Antriebskette kann seitlich geführt werden und kann so seitliche Kräfte aufnehmen.

Ganz besonders bevorzugt ist eine Kraftübertragung zwischen zwei im Förderkanal parallel zur Förderkanalachse benachbart angeordneten Mitnehmern mittels direkten Kontakts zwischen den Mitnehmern erzielbar und/oder durch zwischen den Mitnehmern im Förderkanal angeordnetes Schüttgut.

Dies hat den Vorteil, dass die Anordnung eines Antriebs in einem Antriebsabschnitt ausreichend ist, was die Fördereinrichtung kostengünstiger und in der Wartung einfacher macht.

### Allgemeine Beschreibung des Prinzips eines erfindungsgemäßen Förderelements

Ein weiterer Aspekt der vorliegenden Erfindung betrifft einen Mitnehmer (ein Förderelement) zur Förderung von Schüttgut in einer Fördereinrichtung wie oben beschrieben. Der Mitnehmer umfasst eine Mitnehmerfläche und eine Ausrichtungseinrichtung zur zumindest abschnittsweisen Ausrichtung der mittleren Oberflächensenkrechten der Mitnehmerfläche im Wesentlichen parallel zur Förderkanalachse.

Unter einer "Mitnehmerfläche" des Mitnehmers wird im Sinne der vorliegenden Anmeldung diejenige Fläche verstanden, die im Wesentlichen die Förderung des Schüttguts in der Fördereinrichtung bei bestimmungsgemässem Gebrauch des Mitnehmers bewirkt.

Unter einer "Ausrichtungseinrichtung" wird eine derartige Einrichtung verstanden, mittels der die Mitnehmerfläche des Mitnehmers im Förderkanal so ausrichtbar ist, dass der Mitnehmer bei bestimmungsgemässem Gebrauch dazu geeignet ist, Schüttgut zu fördern. Beispielsweise kann dies durch eine entsprechende Dimensionierung als Zylinder, mittels am Umfang des Mitnehmers parallel zur Förderachse angeordneter Streben (Schafte) oder voneinander beabstandeter Scheiben, die mit einer Strebe (einem Schaft) verbunden sind, erzielt werden.

Unter der "mittleren Oberflächensenkrechten" der Mitnehmerfläche wird im Sinne der vorliegenden Anmeldung der Mittelwert der Oberflächensenkrechten auf der wirksamen Mitnehmerfläche verstanden, die bei bestimmungsgemässem Gebrauch mit Schüttgut in Kontakt kommen kann.

Die Ausrichtung der Mitnehmerfläche mit einer Ausrichtungseinrichtung im Wesentlichen parallel zur Förderkanalachse hat den Vorteil, dass die Mitnehmerfläche im Betrieb eine gewünschte Position einnimmt und damit einen effizienten und kostengünstigen Betrieb ermöglicht. Da die Ausrichtungseinrichtung am Mitnehmer selbst angeordnet ist, ist beispielsweise bei Beschädigung des Mitnehmers ein einfacher Austausch möglich, da der Mitnehmer lose im Förderkanal anordenbar ist, was die Wartung vereinfacht.

Bevorzugt deckt bei Ausrichtung der mittleren Oberflächensenkrechten der Mitnehmerfläche im Wesentlichen parallel zur Förderkanalachse die Mitnehmerfläche den mittleren Förderkanalquerschnitt zu kleiner 100 % ab. Bevorzugt wird der mittlere Förderkanalquerschnitt im Bereich von 50 % bis 99,9 % und besonders bevorzugt von 80 % bis 99,9 % abgedeckt. Insbesondere kann eine Abdeckung im Bereich von 85 % bis 99, 9 % liegen, optional im Bereich von 90 % bis 99,8 % und weiter optional von 92 % bis 97 %; insbesondere wird die Abdeckung in Abhängigkeit vom zu fördernden Schüttgut gewählt.

Unter dem "mittleren Förderkanalquerschnitt" wird im Sinne der vorliegenden Anmeldung der Mittelwert der Querschnittsflächen senkrecht zur Förderkanalachse verstanden, durch den bei bestimmungsgemässem Gebrauch Schüttgut gefördert wird.

Dies hat den Vorteil einer effizienten Förderung von Schüttgut entlang des Förderkanals, was den Betrieb kosteneffizient macht.

Besonders bevorzugt ist die Ausrichtungseinrichtung als zumindest ein erstes Flächenelement und ein zweites Flächenelement ausgebildet, die voneinander im Wesentlichen parallel zur Förderkanalachse beabstandet und miteinander wirkverbunden angeordnet sind, wobei die mittleren Oberflächensenkrechten der Flächenelemente im Wesentlichen parallel zur Förderkanalachse angeordnet sind.

Dies hat den Vorteil der einfachen konstruktiven Ausgestaltung des Mitnehmers. Weiter weist diese Ausgestaltung die oben zur Ausrichtungseinrichtung aufgeführten Vorteile auf.

Beispielsweise kann also der Mitnehmer aus zwei parallel zur Förderkanalachse voneinander beabstandeten kreisförmigen Scheiben ausgebildet sein, die mittels einer Strebe (eines Schaftes), die gegebenenfalls im Wesentlichen parallel zur Förderkanalachse angeordnet ist, miteinander verbunden sind.

Die Antriebsfläche des Mitnehmers kann an einer der beiden Flächenelemente angeordnet sein. Insbesondere kann die Mitnehmerfläche durch eine erste Seite einer der beiden kreisförmigen Scheiben gebildet sein, und die Antriebsfläche kann durch eine der ersten Seite gegenüberliegende zweite Seite dieser Scheibe gebildet sein.

Ganz besonders bevorzugt sind die vom Umfang des ersten Flächenelements und des zweiten Flächenelements umschlossenen Flächen bei einer Projektion parallel zu den mittleren Oberflächensenkrechten im Wesentlichen kongruent ausgebildet.

Unter der "vom Umfang umschlossenen Fläche" des ersten Flächenelements bzw. des zweiten Flächenelements wird im Sinne der vorliegenden Anmeldung verstanden, dass die äusseren Umhüllenden des ersten Flächenelements bzw. des zweiten Flächenelements bei Anordnung in einem Förderkanal im Wesentlichen kongruent aufeinander abbildbar sind; beispielsweise sind zwei parallel zueinander angeordnete vollflächige, kreisförmige Scheiben mit identischem Durchmesser mit parallel zueinander angeordneten Flächen im Wesentlichen kongruent ausgebildet; auch eine kreisförmige, vollflächige Scheibe ohne Öffnungen ist bei Anordnung in einem Förderrohr mit kreisförmigem Querschnitt im Wesentlichen kongruent zu einem Flächenelement umfassend radial angeordnete Streben (Schafte) mit Hohlräumen zwischen den Streben ausgebildet, wenn die Streben den gleichen Radius wie die kreisförmige, vollflächige Scheibe aufweisen.

Die Ausbildung des ersten Flächenelements und des zweiten Flächenelements im Wesentlichen kongruent zueinander hat den Vorteil, dass der Mitnehmer konstruktiv einfach ausgestaltbar ist, was die Wartung weiter vereinfacht und die Kosten für den Mitnehmer senkt.

Bevorzugt ist das der Förderrichtung des Schüttguts zugewandte erste Flächenelement des Mitnehmers für das Schüttgut durchlässig. Insbesondere umfasst das zweite Flächenelement die Mitnehmerfläche. Insbesondere ist das zweite Flächenelement auf der der Förderrichtung abgewandten Seite des Mitnehmers angeordnet.

Unter der "Förderrichtung" wird im Sinne der vorliegenden Anmeldung die Richtung verstanden, in der das Schüttgut im Mittel entlang des Förderkanals in der Fördereinrichtung gefördert wird, insbesondere in einem Abschnitt entlang des Förderkanals.

Unter dem Begriff "durchlässig" für ein Flächenelement wird im Sinne der vorliegenden Anmeldung eine Durchlässigkeit für das zu fördernde Schüttgut verstanden; beispielsweise kann eine Durchlässigkeit durch Anordnung von ausreichend grossen Öffnungen für das Schüttgut im ersten Flächenelement ausgestaltet sein.

Die Durchlässigkeit des ersten Flächenelements, welches beabstandet im Wesentlichen parallel zur Förderkanalachse zum zweiten Flächenelement angeordnet ist, hat den Vorteil, dass der Raum zwischen den Flächenelementen zur Förderung von Schüttgut verwendet werden kann, was den Durchsatz erhöht und damit effizienter im Hinblick auf die Kosten ist.

Besonders bevorzugt weist der Mitnehmer auf der der Förderrichtung zugewandten und/oder auf der der Förderrichtung abgewandten Seite einen Abstandshalter auf. Insbesondere ist der Abstandshalter ein im Wesentlichen parallel zur Förderkanalachse angeordneter Arm. Weiter insbesondere ist der Abstandshalter am vom Mitnehmer abgewandten Ende kugelförmig oder kalottenförmig ausgebildet.

Unter der Formulierung "kugelförmig oder kalottenförmig" wird im Sinne der vorliegenden Anmeldung verstanden, dass am dem Mitnehmer abgewandten Ende des Abstandshalters eine Kugel oder eine Kalotte angeordnet ist. Unter einer Kalotte wird ein abgeflachter Kugelschnitt verstanden.

Die Anordnung von zumindest einem Abstandshalter am Mitnehmer hat den Vorteil, dass ein Mindestabstand zur effizienten Förderung von Schüttgut im Förderkanal mit konstruktiv einfachen Mitteln erzielbar ist, was den Wartungsaufwand verringert und den Betrieb kostengünstig und effizient ausgestaltet. Die Anordnung eines kugelförmigen oder kalottenförmigen Abstandshalters hat den Vorteil, dass auch in gekrümmten Förderkanälen der Abstandshalter zuverlässig funktioniert und das Auftreten hoher Punktbelastungen minimiert wird, was den Verschleiss und damit den Wartungsaufwand reduziert.

Ganz besonders bevorzugt weist der Mitnehmer auf der der Förderrichtung zugewandten oder auf der der Förderrichtung abgewandten Seite eine Ausnehmung auf, die derart ausgebildet ist, dass der Abstandshalter in die Ausnehmung eingreifen kann.

Insbesondere ist die Ausnehmung trichterförmig und weiter insbesondere zumindest abschnittsweise kugelförmig oder zumindest abschnittsweise parabelförmig ausgebildet.

Dies hat den Vorteil, dass ein Abstandshalter zuverlässig auch in gekrümmten Bereichen des Förderkanals in die Ausnehmung eingreifen kann, was den Betrieb zuverlässiger macht und den Verschleiss verringert für einen geringeren Wartungsaufwand.

### Allgemeine Beschreibung des Prinzips einer Zufuhreinrichtung für Schüttgut, zum Beispiel für eine erfindungsgemäße Fördereinrichtung

Ein weiterer Aspekt betrifft eine Zufuhreinrichtung für Schüttgut in einen Einlass in eine Fördereinrichtung umfassend einen Förderkanal mit einer Innenwand. Insbesondere wird die Zufuhreinrichtung mit einer Fördereinrichtung wie vorstehend beschrieben verwendet und optional mit einem Mitnehmer wie vorstehend beschrieben. Das Schüttgut ist im Wesentlichen mittels Schwerkraft in die Fördereinrichtung förderbar. Insbesondere wird die Zufuhreinrichtung an einem im Wesentlichen horizontalen Abschnitt der Fördereinrichtung angeordnet. Der Einlass überstreicht einen Winkelbereich der Innenwand von grösser 0°bis kleiner 180° und/oder kleiner 0° bis grösser -180° bezogen auf die Schwerkraftrichtung. Bevorzugt ist der Winkelbereich grösser 20° bis kleiner 160° und/oder kleiner -20° bis grösser - 160°. Besonders bevorzugt ist der Winkelbereich grösser 45° bis kleiner 150° und/oder kleiner -45° bis grösser -150°.

Unter einem "Winkel bezogen auf die Schwerkraftrichtung" wird im Sinne der vorliegenden Anmeldung verstanden, dass die Schwerkraftrichtung einen Winkel von 0° definiert und ein positiver Winkel im Uhrzeigersinn zur Schwerkraftrichtung gemessen wird und ein negativer Winkel im Gegenuhrzeigersinn.

Ein "im Wesentlicher horizontaler Abschnitt" ist im Sinne der vorliegenden Anmeldung ein Abschnitt, der im Wesentlichen senkrecht zur Schwerkraftrichtung angeordnet ist.

Unter einem "Winkelbereich, der die Innenwand überstreicht" wird im Sinne der vorliegenden Anmeldung verstanden, dass der Einlass in die Fördereinrichtung einen Öffnungswinkel überstreicht, gemessen von der Förderkanalachse, d. h. dem Mittelpunkt des Förderkanals. Der Winkelbereich ist als mittlerer Winkelbereich aufzufassen.

Beispielsweise ist also der Einlass, wenn der Einlass in einem im Wesentlichen horizontalen Abschnitt der Fördereinrichtung angeordnet ist, seitlich angeordnet.

Die Anordnung des Einlasses im beschriebenen Winkelbereich hat den Vorteil, dass eine Füllhöhe bzw. ein Füllgrad im Förderkanal entsprechend den Anforderungen einstellbar ist. Der Winkelbereich kann vorteilhaft in Abhängigkeit vom verwendeten Schüttgut gewählt werden.

Beispielsweise kann der Winkelbereich fest eingestellt sein; dies hat den Vorteil, dass der Winkelbereich beispielsweise für ein zu förderndes Schüttgut auf einen optimalen Wert fixierbar ist, was den Betrieb der Fördereinrichtung zuverlässiger macht.

Bevorzugt ist der Winkelbereich einstellbar, insbesondere mittels eines Schiebers.

Beispielsweise kann der Schieber als Drehschieber und/oder als Drehmuffe am Förderkanal und/oder an der Zufuhreinrichtung angeordnet sein.

Die Einstellbarkeit des Winkelbereichs hat den Vorteil, dass in Abhängigkeit von den Anforderungen an die Schüttgutförderung sowie auch in Abhängigkeit vom zu fördernden Schüttgut der Winkelbereich einstellbar ist zur Einstellung des Füllgrads im Förderkanal.

Besonders bevorzugt umfasst die Zufuhreinrichtung einen Umlenkbereich zur Förderung des Schüttguts zum Einlass.

Dies hat den Vorteil, dass das Schüttgut, welches beispielsweise stromaufwärts in einem Vorratsbehälter gelagert ist, durch den Umlenkbereich zum Förderkanal förderbar ist, wobei durch den Umlenkbereich die Fördergeschwindigkeit bzw. Förderrate des Schüttguts in den Förderkanal einstellbar ist.

Unter einem "Umlenkbereich" wird im Sinne der vorliegenden Anmeldung ein Bereich verstanden, in dem eine Umlenkung des Schüttguts von einer Förderrichtung im Wesentlichen parallel zur Schwerkraftrichtung stattfindet.

Ganz besonders bevorzugt ist der Umlenkbereich als Umlenkfläche ausgebildet und in einem Umlenkwinkel bezogen auf die Schwerkraftrichtung im Bereich von 30° bis 70° angeordnet.

Bevorzugt ist der Umlenkwinkel im Bereich von 40° bis 60°, besonders bevorzugt von 45° bis 55° angeordnet.

Alternativ kann der Umlenkwinkel auch -30° bis -70°, bevorzugt von -40° bis -60° und besonders bevorzugt von -45° bis -55° betragen.

Die Anordnung einer Umlenkfläche im beschriebenen Winkelbereich hat den Vorteil, dass in Abhängigkeit vom verwendeten Schüttgut und der geforderten Flussrate die Menge an zugeführtem Schüttgut einstellbar ist.

Insbesondere ist der Umlenkwinkel einstellbar, was vorteilhaft eine Einstellbarkeit des Umlenkwinkels in Abhängigkeit der jeweiligen Anforderungen erlaubt.

### Allgemeine Beschreibung des Prinzips eines Verfahrens zur Förderung von Schüttgut mit einer erfindungsgemäßen Fördereinrichtung und/oder mindestens einem erfindungsgemäßen Förderelement

Ein zusätzlicher Aspekt betrifft ein Verfahren zum Fördern von Schüttgut mit einer Fördereinrichtung wie oben beschrieben. Optional umfasst die Fördereinrichtung einen Mitnehmer wie oben beschrieben. Weiter optional umfasst die Vorrichtung eine Zufuhreinrichtung wie oben beschrieben. Das Verfahren umfasst den Schritt der Förderung des Schüttguts von einem Einlass zu einem Auslass.

Das Verfahren weist die oben beschriebenen Vorteile auf.

### Allgemeine Beschreibung des Prinzips eines Verfahrens zum Aufrüsten und/oder Umrüsten einer erfindungsgemäßen Fördereinrichtung

Ein weiterer Aspekt betrifft ein Verfahren zum Aufrüsten und/oder Umrüsten einer Fördereinrichtung zur Förderung von Schüttgut. Das Verfahren umfasst den Schritt der Montage zumindest eines Mitnehmers zur Herstellung einer Fördereinrichtung wie oben beschrieben. Insbesondere wird ein Mitnehmer wie oben beschrieben montiert. Das Verfahren umfasst weiterhin optional den Schritt der Montage einer Zufuhreinrichtung wie oben beschrieben.

Dies hat den Vorteil, dass bereits installierte Fördereinrichtungen aufrüstbar und/oder umrüstbar sind zu einer erfindungsgemässen Fördereinrichtung, was kostengünstig ist, da keine Installation einer komplett neuen Fördereinrichtung notwendig wird.

Prinzipielle Erläuterungen, allgemeine Definitionen und besondere Merkmale, die in einem bestimmten Absatz (z.B. bezüglich der Fördereinrichtung) in der vorliegenden Anmeldung beschrieben wurden, gelten ebenso für andere Absätze (z.B. bezüglich des Förderelements) in dieser Anmeldung.

Weitere Merkmale und Vorteile der Erfindung werden nachfolgend anhand von Ausführungsbeispielen zum besseren Verständnis näher erläutert, ohne dass die Erfindung auf die Ausführungsbeispiele zu beschränken ist. Es zeigen:
- Figur 1:: perspektivische Darstellung einer erfindungsgemässen Fördereinrichtung;
- Figur 2:: Vorderansicht der erfindungsgemässen Fördereinrichtung gemäss Figur 1;
- Figur 3:: vergrösserte Darstellung des Antriebsabschnitts der erfindungsgemässen Fördereinrichtung gemäss Figur 1;
- Figur 4:: Vorderansicht eines Ausschnitts der erfindungsgemässen Fördereinrichtung gemäss Figur 1 umfassend den Antriebsabschnitt;
- Figur 5:: Ausschnitt einer erfindungsgemässen Fördereinrichtung umfassend zwei Mitnehmer in einem geraden Förderrohr;
- Figur 6:: Ausschnitt einer erfindungsgemässen Fördereinrichtung mit zwei Mitnehmern in einem gekrümmten Förderkanal;
- Figur 7:: photographische Darstellung zweier erfindungsgemässer Mitnehmer in Wirkverbindung in einer Förderrinne;
- Figur 8:: perspektivische Darstellung eines erfindungsgemässen Mitnehmers;
- Figur 9:: Seitenansicht des Mitnehmers gemäss Figur 8;
- Figur 10:: schematische Darstellung einer erfindungsgemässen Zufuhreinrichtung mit einem Förderkanal;
- Figur 11:: perspektivische Darstellung eines Teils einer alternativen erfindungsgemässen Fördereinrichtung mit Mitnehmern und Schüttgut;
- Figur 12:: schematische Darstellung einer Fördereinrichtung mit S-förmigem Förderrohr;
- Figur 13a:: eine perspektivische Ansicht einer weiteren Ausführungsform einer erfindungsgemässen Fördereinrichtung mit an einem Antriebskettenpaar angeordneten Mitnehmerbolzen;
- Figur 13b:: eine Draufsicht auf die Fördereinrichtung gemäss Figur 13a;
- Figur 14a:: eine perspektivische Ansicht einer weiteren Ausführungsform einer erfindungsgemässen Fördereinrichtung mit an zwei Antriebskettenpaaren angeordneten Mitnehmerbolzen;
- Figur 14b:: eine Draufsicht auf die Fördereinrichtung gemäss Figur 14a;
- Figur 15a:: eine perspektivische Ansicht einer weiteren Ausführungsform einer erfindungsgemässen Fördereinrichtung mit an einer Antriebskette angeordneten Mitnehmervorsprüngen;
- Figur 15b:: eine Draufsicht auf die Fördereinrichtung gemäss Figur 15a;
- Figur 16a:: eine perspektivische Ansicht einer weiteren Ausführungsform einer erfindungsgemässen Fördereinrichtung mit an zwei Antriebsketten angeordneten MitnehmervorSprüngen;
- Figur 16b:: eine Draufsicht auf die Fördereinrichtung gemäss Figur 16a;
- Figur 17a:: eine perspektivische Ansicht einer weiteren Ausführungsform einer erfindungsgemässen Fördereinrichtung mit einer Antriebsschnecke;
- Figur 17b:: eine Draufsicht auf die Fördereinrichtung gemäss Figur 17a;
- Figur 18a:: eine perspektivische Ansicht einer weiteren Ausführungsform einer erfindungsgemässen Fördereinrichtung mit zwei Antriebsschnecken;
- Figur 18b:: eine Draufsicht auf die Fördereinrichtung gemäss Figur 18a;
- Figur 19a:: eine Fördereinrichtung mit einem Viergelenkantrieb zu einem ersten Zeitpunkt;
- Figur 19b:: die Fördereinrichtung gemäss Figur 19a zu einem zweiten Zweitpunkt;
- Figur 20:: eine Ansicht eines Förderelements gemäß einer Ausführungsform der Erfindung in einem Förderkanal;
- Figur 21a:: eine Detailansicht des Förderelements gemäß der Ausführungsform in Figur 20;
- Figur 21b:: eine Detailansicht eines Förderelements gemäß einer Ausführungsform der Erfindung;
- Figur 21c:: eine Detailansicht eines Förderelements gemäß einer Ausführungsform der Erfindung;
- Figur 22:: eine Ansicht eines Förderelements gemäß einer Ausführungsform der Erfindung in einem Förderkanal;
- Figur 23:: eine Ansicht eines Förderkanals mit mehreren erfindungsgemäßen Förderelementen;
- Figur 24:: eine perspektivische Ansicht eines Förderelements gemäß einer Ausführungsform der Erfindung;
- Figur 25:: eine perspektivische Ansicht eines Förderelements gemäß einer Ausführungsform der Erfindung.

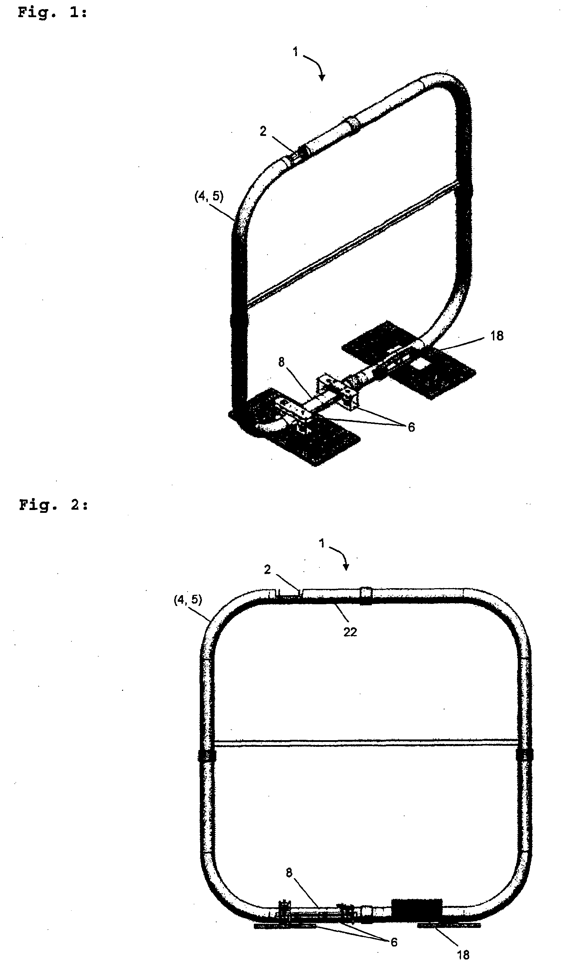

Im Folgenden werden zunächst Figuren 1 bis 19 beschrieben.

In Figur 1 ist in perspektivischer Darstellung eine erfindungsgemässe Fördereinrichtung 1 zur Förderung von Schüttgut dargestellt. Der Förderkanal 4 ist als Förderrohr 5 ausgebildet, welches beispielsweise aus Stahl oder Kunststoff bestehen kann. Der Förderkanal 4 ist umlaufend geschlossen ausgebildet, so dass im Förderkanal 4 angeordnete Mitnehmer (Förderelemente) 2 endlos umlaufen können.

In der Fördereinrichtung 1 ist eine Mehrzahl von Mitnehmern 2 angeordnet, die mittels des Antriebs 6 im Antriebsabschnitt 8 angetrieben werden. Die Mitnehmer sind entlang der Förderkanalachse lose im Förderkanal 4 angeordnet.

Schüttgut wird mittels der Zufuhreinrichtung 18 in den Förderkanal 4 gefördert.

In Figur 2 ist in einer Vorderansicht die Fördereinrichtung 1 gemäss Figur 1 dargestellt.

Gleiche Referenzzeichen bezeichnen im Folgenden gleiche Merkmale in den Figuren und werden deshalb nur bei Bedarf erneut erläutert.

In der Darstellung gemäss Figur 2 ist ein Auslass 22 dargestellt. Im Betrieb wird Schüttgut durch die Zufuhreinrichtung 18 in den Förderkanal 4 gefördert. Das im Förderkanal 4 sich befindende Schüttgut wird mittels der angetriebenen Mitnehmer 2 zum Auslass 22 gefördert, wo das Schüttgut aus der Fördereinrichtung 1 beispielsweise in einen hier nicht dargestellten Auffangbehälter fällt.

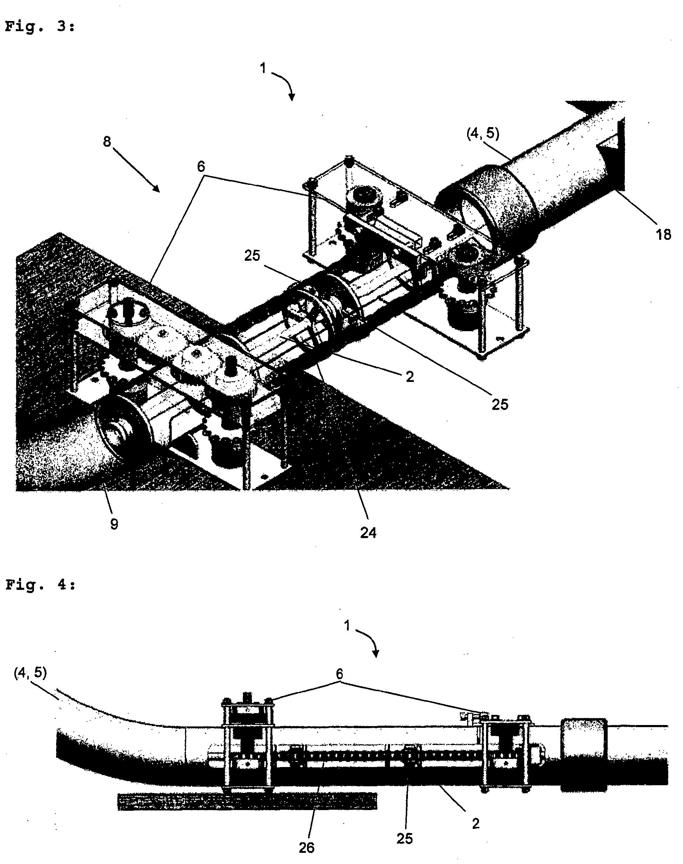

In Figur 3 ist in perspektivischer Darstellung der Bereich umfassend den Antriebsabschnitt 8 der Fördereinrichtung 1 gemäss Figur 1 dargestellt. Das Förderrohr 5 hat eine Innenwand 9, die als Führungseinrichtung entlang der Förderkanalachse für den Mitnehmer 2 wirkt.

Im Antriebsabschnitt 8 wird mittels Antriebsarmen 25 eine Kraft im Wesentlichen parallel zur Förderkanalachse auf die Mitnehmer 2 ausgeübt. Die Antriebsarme 25 werden mittels einer Antriebskette 2 4 im Antriebsabschnitt 8 im Wesentlichen parallel zur Förderkanalachse bewegt. Die Kraft wird im Wesentlichen in dem der Innenwand 9 des Förderkanals zugewandten Umfangsbereich des Mitnehmers 2 auf den Mitnehmer 2 ausgeübt.

In Figur 4 ist in einer Vorderansicht ein Teil des Ausschnitts der Fördereinrichtung 1 gemäss Figur 3 dargestellt.

Die mittels der Antriebskette 24 angetriebenen Antriebsarme 25 greifen in das Förderrohr 5 durch eine EingreifÖffnung 2 6 ein. Da eine Zuführung von Schüttgut erst stromabwärts des Antriebsabschnitts mit dem Antrieb 6 erfolgt, ist eine Abdichtung der EingreifÖffnung 2 6 nicht in jedem Fall notwendig.

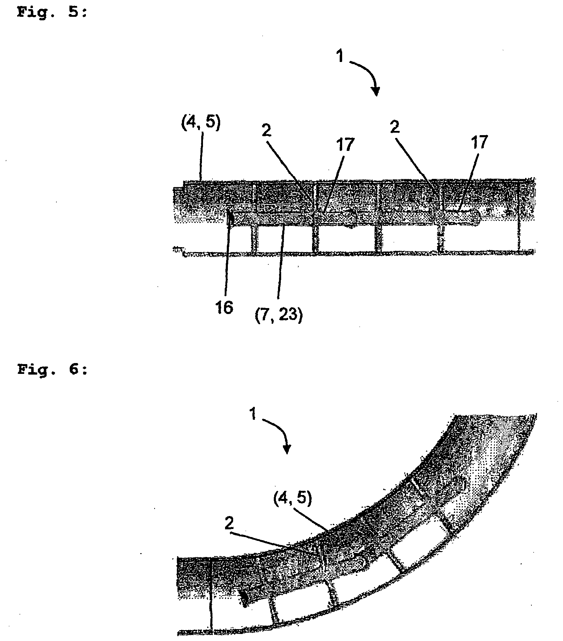

In Figur 5 ist schematisch ein Ausschnitt eines Förderkanals 4, welcher als Förderrohr 5 ausgebildet ist, umfassend zwei Mitnehmer 2 dargestellt. Die Mitnehmer 2 weisen auf der der Förderrichtung zugewandten Seite der Mitnehmer 2 Arme 17 auf, die als Abstandshalter dienen. Auf der der Förderrichtung abgewandten Seite weisen die Mitnehmer 2 Ausnehmungen 16 auf, in die gegebenenfalls ein benachbart angeordneter Mitnehmer 2 mit dem Arm 17 eingreifen kann.

Die Mitnehmer 2 umfassen Streben (Schafte) 23, die vorliegend im Wesentlichen parallel zur Förderkanalachse 7 angeordnet sind.

In Figur 6 ist schematisch ein Ausschnitt einer Fördereinrichtung mit gekrümmtem Förderkanal mit darin angeordneten Mitnehmern 2 dargestellt.

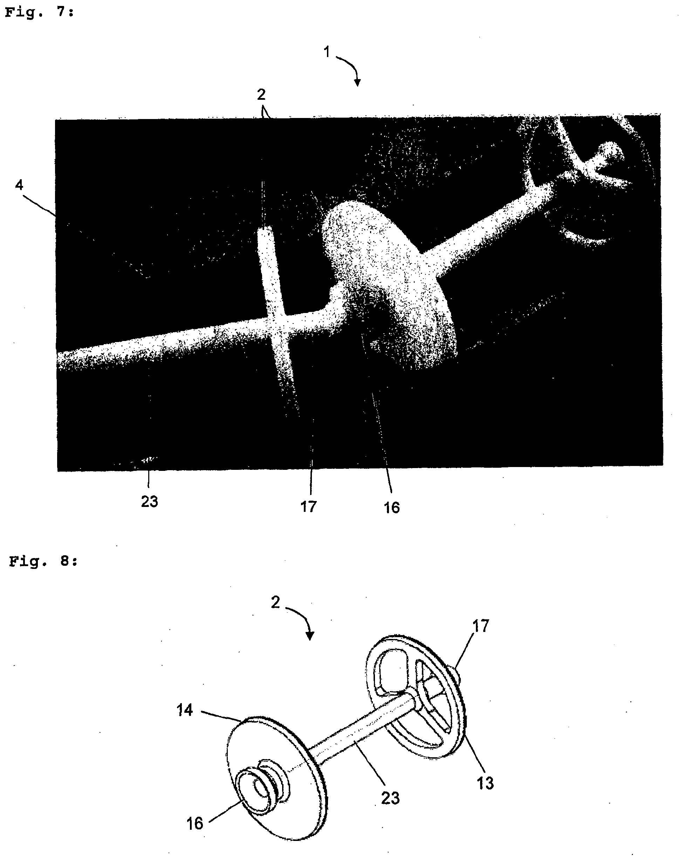

In Figur 7 ist photographisch ein Ausschnitt einer Fördereinrichtung 1 mit einem als Förderrinne ausgebildeten Förderkanal 4 dargestellt, in dem zwei Mitnehmer 2 mit Arm 17 und Ausnehmung 16 dargestellt sind in einem gekrümmten Abschnitt des Förderkanals.

In Figur 8 ist in perspektivischer Darstellung ein erfindungsgemässer Mitnehmer 2 dargestellt.

Der Mitnehmer 2 gemäss Figur 8 weist einen Arm 17 auf, der bei bestimmungsgemässem Gebrauch auf der der Förderrichtung zugewandten Seite in einem Förderkanal angeordnet wird.

Der Mitnehmer 2 weist ein erstes Flächenelement 13 auf, welches für Schüttgut durchlässig ist. Der Mitnehmer 2 weist weiterhin ein zweites Flächenelement 14 auf, welches die hier nicht gezeigte Mitnehmerfläche umfasst. Das erste Flächenelement 13 und das zweite Flächenelement 14 sind mittels einer Strebe (eines Schaftes) 23 voneinander beabstandet angeordnet zur Wirkverbindung der beiden Flächenelemente.

Zudem weist der Mitnehmer 2 auf der der Förderrichtung abgewandten Seite des zweiten Flächenelements 14 eine Ausnehmung 16 auf, in die ein Arm 17 eines benachbart angeordneten Mitnehmers eingreifen kann.

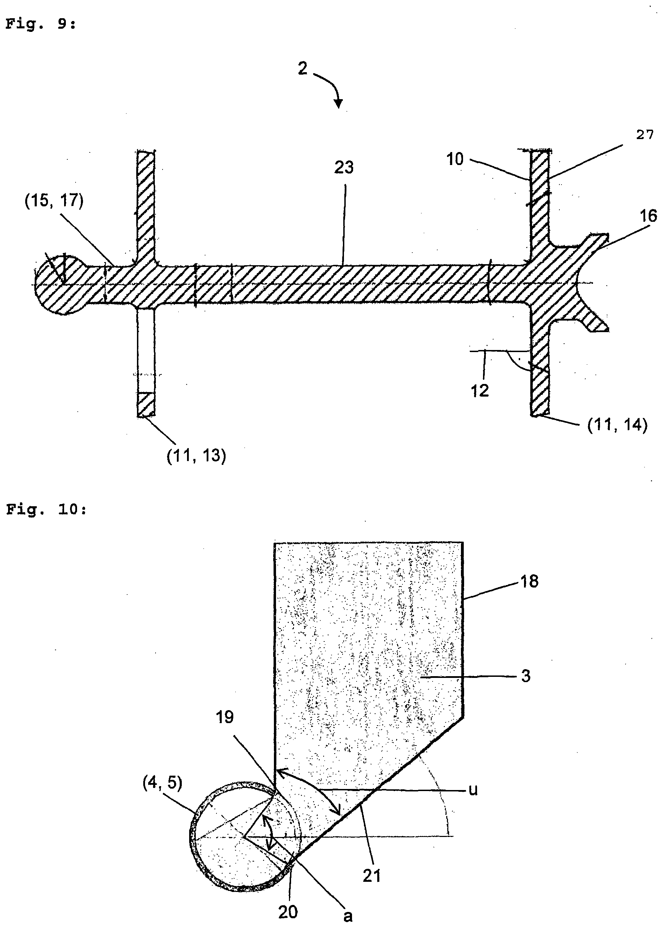

In Figur 9 ist in einer Seitenansicht der erfindungsgemässe Mitnehmer 2 gemäss Figur 8 dargestellt.

Der Mitnehmer 2 weist einen Abstandshalter 15 auf, der als Arm 17 ausgebildet ist. Der Arm 17 ist am vom Mitnehmer 2 abgewandten Ende kugelförmig ausgebildet. Auf der der Förderrichtung abgewandten Seite weist der Mitnehmer 2 eine Ausnehmung 16 auf, die abschnittsweise kugelförmig ausgebildet ist, so dass der kugelförmig ausgebildete Abstandshalter 15 in die komplementäre Ausnehmung 16 eines weiteren Mitnehmers eingreifen kann.

Das erste Flächenelement 13 und das zweite Flächenelement 14 sind mittels der Strebe (des Schafts) 23 miteinander wirkverbunden, wobei das erste Flächenelement 13 und das zweite Flächenelement 14 als Ausrichtungseinrichtung 11 wirken. Das erste Flächenelement 13 ist durchlässig für Schüttgut.

Das zweite Flächenelement 14 umfasst an einer ersten Seite die Mitnehmerfläche 10 zur Förderung des Schüttguts entlang des Förderkanals und an einer der ersten Seite gegenüberliegenden zweiten Seite eine Antriebsfläche 27. Die Antriebsfläche 27 kann elastisch ausgebildet sein und insbesondere aus Kunststoff oder Gummi bestehen. Alternativ kann die Antriebsfläche 27 jedoch auch aus Stahl bestehen. Auf diese Antriebsfläche 27 kann der Antrieb eine Kraft ausüben, um den Mitnehmer 2 anzutreiben.

Die vom Umfang des ersten Flächenelements 13 und des zweiten Flächenelements 14 umschlossenen Flächen sind bei einer Projektion im Wesentlichen parallel zur mittleren Oberflächensenkrechten 12 im Wesentlichen kongruent zueinander ausgebildet, was zur gewünschten Ausrichtung des Mitnehmers 2 im Förderkanal führt.

In Figur 10 ist eine erfindungsgemässe Zufuhreinrichtung 18 zur Zufuhr von Schüttgut 3 in ein Förderrohr 5 der Fördereinrichtung dargestellt in einer Seitenansicht.

Das Förderrohr 5 weist einen Einlass 19 auf, der einen Winkelbereich a von ca. 90 ° überstreicht. Mittels eines Schiebers 20, der als Drehschieber ausgebildet ist, kann der Winkelbereich a entsprechend den Anforderungen eingestellt werden.

Die Zufuhreinrichtung 18 weist einen Umlenkbereich 21 auf, der mit einem Umlenkwinkel u von ca. 50 ° bezogen auf die Schwerkraftrichtung angeordnet ist.

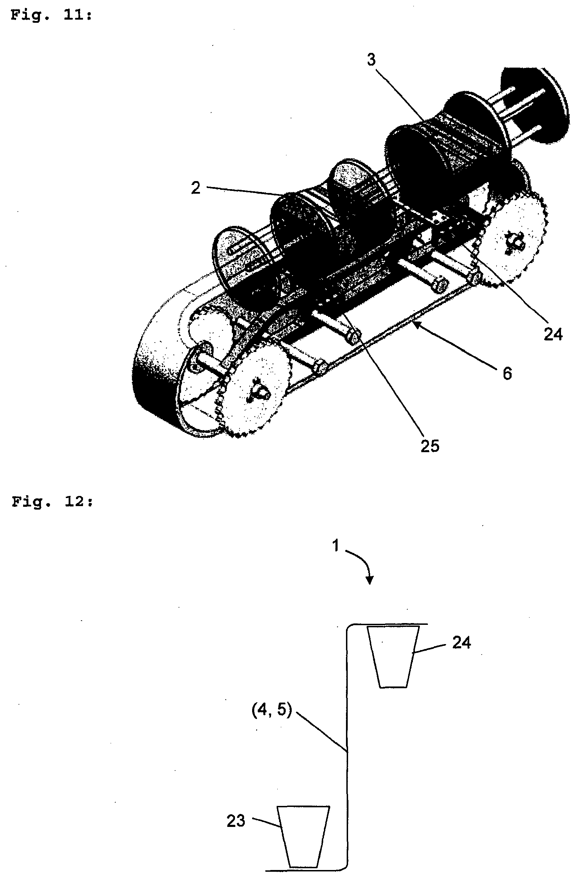

In Figur 11 ist in perspektivischer Darstellung ein Ausschnitt einer alternativen erfindungsgemässen Fördereinrichtung dargestellt. Zur besseren Übersicht wurde hier das Förderrohr ausgeblendet.

In dem Förderrohr ist eine Mehrzahl von Mitnehmern 2 angeordnet, wobei vorliegend drei Mitnehmer 2 sichtbar sind. Mittels einer Antriebskette 24 (nur abschnittsweise dargestellt) und daran angeordneter Antriebsarme 25 ist eine Kraft auf die Mitnehmer 2 im Wesentlichen parallel zur Förderkanalachse ausübbar. Die Mitnehmer 2 weisen keine Abstandshalter auf. Zwischen den Mitnehmern 2 ist Schüttgut 3 angeordnet, was zur vorliegenden gewünschten Beabstandung der Mitnehmer 2 führt.

In Figur 12 ist in schematischer Darstellung eine Seitenansicht einer Fördereinrichtung 1 mit einem Förderrohr 5 dargestellt. Das Förderrohr 5 ist S-förmig ausgebildet. In einem unteren Bereich ist ein Einlassbehälter 23 zur Zuführung von Schüttgut angeordnet, welches mittels nicht dargestellter Mitnehmer zum Auslassbehälter 24 gefördert wird. Der Einlass und der Auslass sind hier nicht dargestellt.

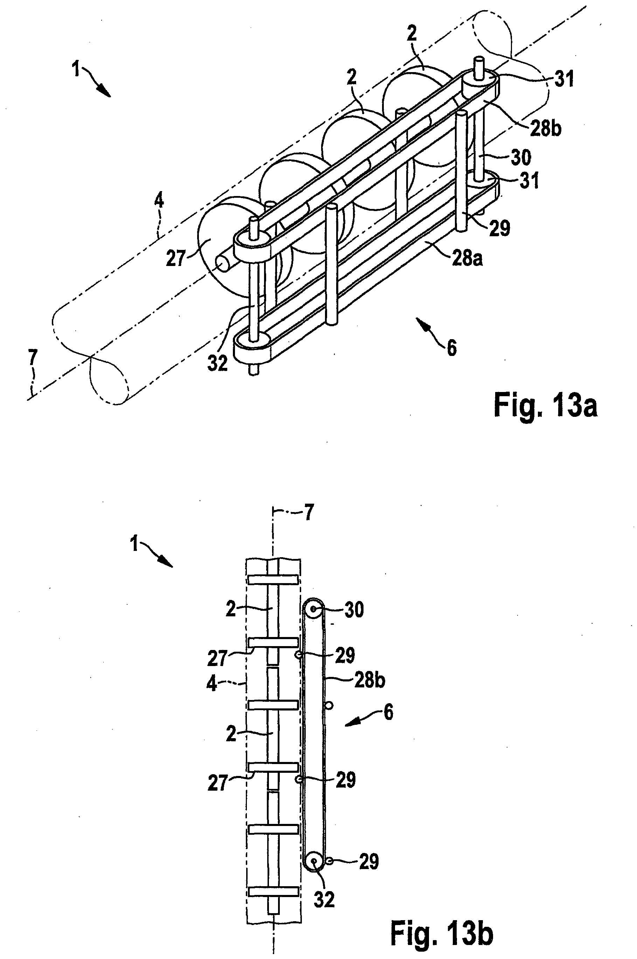

Die Fördereinrichtung 1 gemäss den Figuren 13a und 13b enthält ein Kettengetriebe 6 mit einem Antriebskettenpaar, welches aus einer unteren Antriebskette 28a und einer oberen Antriebskette 28b besteht. An diesen Antriebsketten 28a, 28b sind vier Mitnehmerbolzen 29 befestigt, wobei die jeweils unteren Enden der Mitnehmerbolzen 29 an der unteren Antriebskette 28a befestigt sind und die oberen Enden der Mitnehmerbolzen 2 9 an der oberen Antriebskette 28b. Auf diese Weise erstrecken sich die Mitnehmerbolzen 2 9 in einer vertikalen Richtung. Die beiden Antriebsketten 28a, 28b werden mit Hilfe einer Antriebswelle 30 und zweier daran befestigter Kettenräder 31 angetrieben. Am gegenüberliegenden Ende werden die Antriebsketten 28a, 28b mit Hilfe einer Umlenkachse 32 umgelenkt. Denkbar sind auch mehr oder weniger als vier Mitnehmerbolzen 29, die an den Antriebsketten 28a, 28b befestigt sind.

Durch Rotation der Antriebswelle 30 werden die Mitnehmerbolzen 2 9 entlang der Förderkanalachse 7 bewegt. Hierdurch geraten die Mitnehmerbolzen 2 9 in Kontakt mit den Antriebsflächen 27 der Mitnehmer 2 und treiben diese somit an.

Der Abstand zweier benachbarter Mitnehmerbolzen 29 ist etwa das 1,02-fache der Ausdehnung der Mitnehmer 2 entlang der Förderkanalachse 7 und damit im Sinne der obigen Definition im Wesentlichen identisch mit dieser Ausdehnung. Hierdurch kann bewerkstelligt werden, dass die Mitnehmer 2 während des Antreibens einander beinahe berühren. Eine Berührung wird jedoch verhindert, um unbeabsichtigte Kollisionen benachbarter Mitnehmer 2 zu verhindern. Zudem ist der Antriebsabschnitt entlang der Förderkanalachse 7 doppelt so lang wie die Mitnehmer 2. Somit befindet sich zu jedem Zeitpunkt mindestens ein Mitnehmer 2 vollständig im Antriebsabschnitt

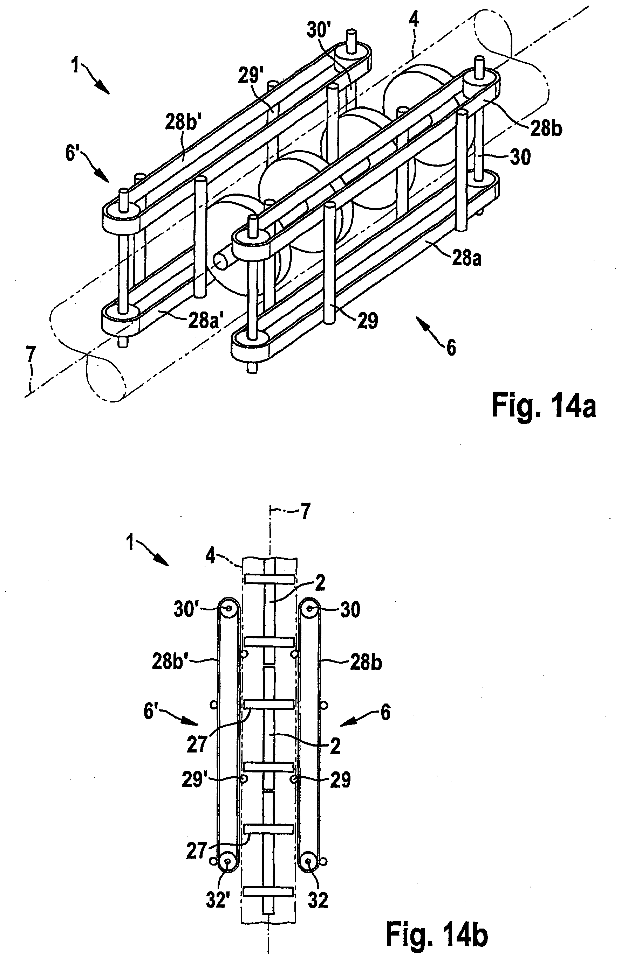

Das in den Figuren 14a und 14b gezeigte Ausführungsbeispiel enthält zwei Kettengetriebe 6 und 6' mit Antriebskettenpaaren 28a, 28b und 28a', 28b', die jeweils vier Mitnehmerbolzen 29 bzw. 29' aufweisen. Die beiden Antriebskettenpaare 28a, 28b und 28a', 28b' sind an gegenüberliegenden Seiten des Förderkanals 4 angeordnet. Um eine synchrone Bewegung und eine vertikale Ausrichtung der Mitnehmerbolzen 29, 29' zu ermöglichen, können die beiden Antriebswellen 30, 30' über ein hier nicht dargestelltes Zahnradgetriebe von einem gemeinsamen Motor angetrieben werden.

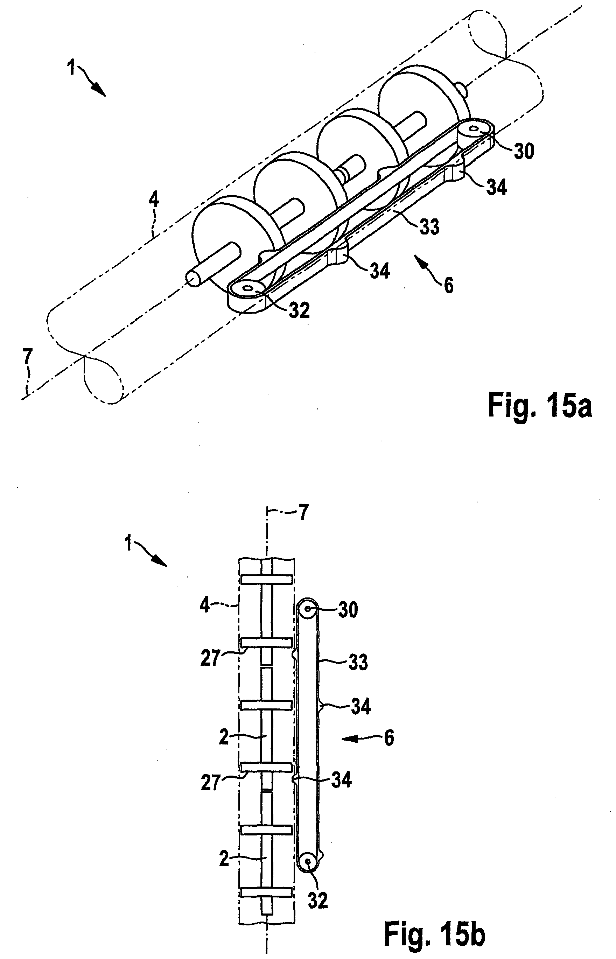

Das Kettengetriebe 6 im Ausführungsbeispiel gemäss den Figuren 15a und 15b enthält eine Antriebskette 33, welches von einer Antriebswelle 30 angetrieben und einer Umlenkachse 32 umgelenkt wird. An der Antriebskette 33 sind vier Mitnehmervorsprünge 34 angeschraubt, mittels deren die Mitnehmer 2 angetrieben werden können. Die Antriebskette 33 ist seitlich vom Förderkanal 4 angeordnet.

Der Abstand zweier benachbarter Mitnehmervorsprünge 34 ist etwa das 1,02-fache der Ausdehnung der Mitnehmer 2 entlang der Förderkanalachse 7 und damit im Sinne der obigen Definition im Wesentlichen identisch mit dieser Ausdehnung. Hierdurch kann bewerkstelligt werden, dass die Mitnehmer 2 während des Antreibens einander beinahe berühren. Zudem ist der Antriebsabschnitt auch in diesem Beispiel entlang der Förderkanalachse 7 doppelt so lang wie die Mitnehmer 2. Somit befindet sich zu jedem Zeitpunkt mindestens ein Mitnehmer 2 vollständig im Antriebsabschnitt.

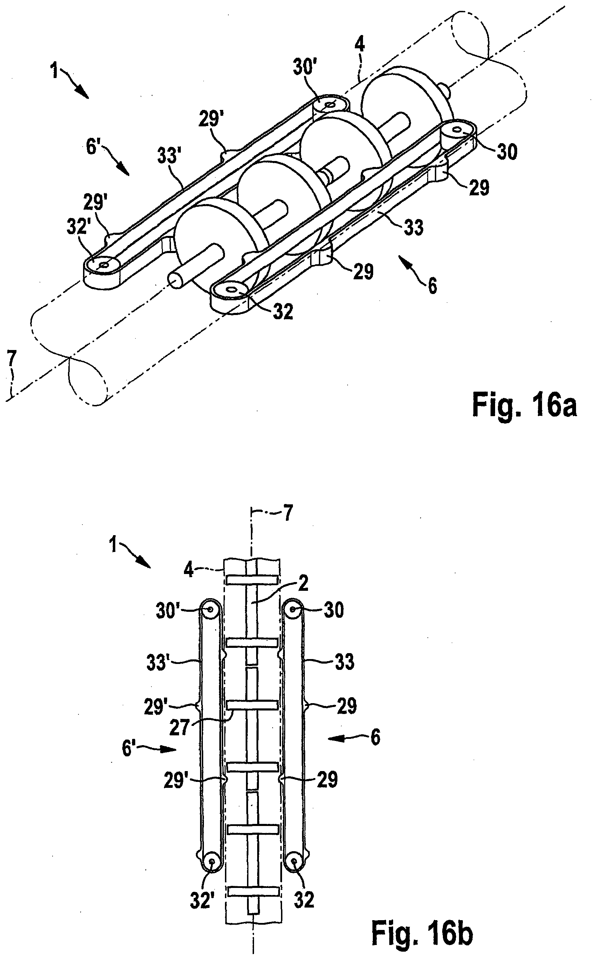

Im Gegensatz zu den Figuren 15a und 15b enthält die Fördereinrichtung 1 gemäss den Figuren 16a und 16b zwei gegenüberliegende Antriebsketten 33, 33' mit jeweiligen Antriebswellen 30 bzw. 30' und Umlenkachsen 32 bzw. 32' sowie Mitnehmervorsprüngen 34 bzw. 34'. Auch in diesem Ausführungsbeispiel kann die Synchronisation der beiden Antriebswellen 30 und 30' mit Hilfe eines hier nicht dargestellten Zahnradgetriebes erfolgen.

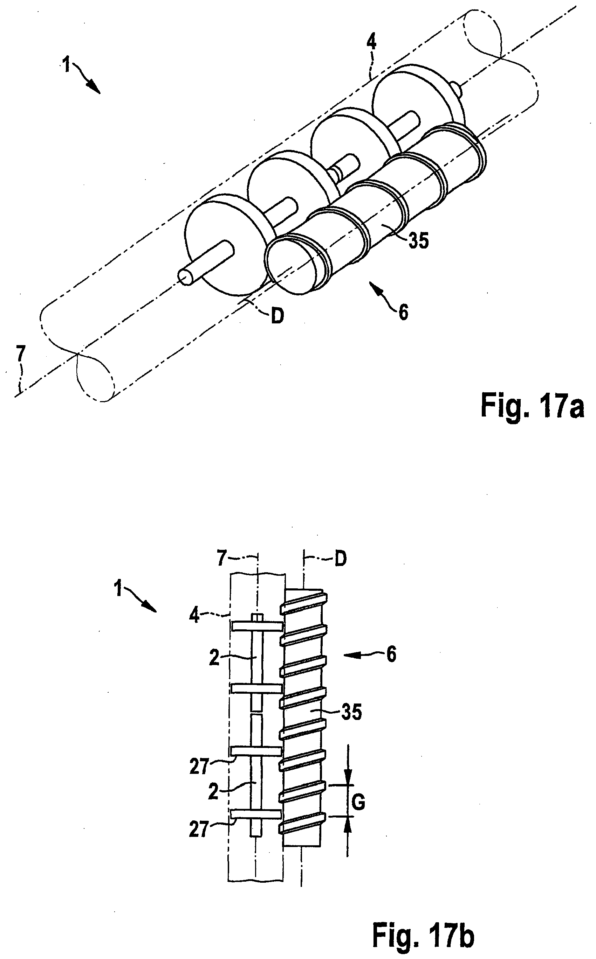

In den Figuren 17a und 17b dargestellten Ausführungsbeispiel ist der Antrieb als Schneckenantrieb 6 mit einer drehbaren Antriebsschnecke 35 ausgebildet, deren Drehachse D parallel zur Förderkanalachse 7 verläuft. In diesem Ausführungsbeispiel erfolgt der Antrieb der Mitnehmer 2 durch Drehung der Antriebsschnecke 35 um ihre Drehachse D.

Die Ausdehnung der Mitnehmer 2 entlang der Förderkanalachse 7 ist etwa das 3,9-fache der Ganghöhe G der Antriebsschnecke 35. Hierdurch kann bewerkstelligt werden, dass die Mitnehmer 2 während des Antreibens einander beinahe berühren.

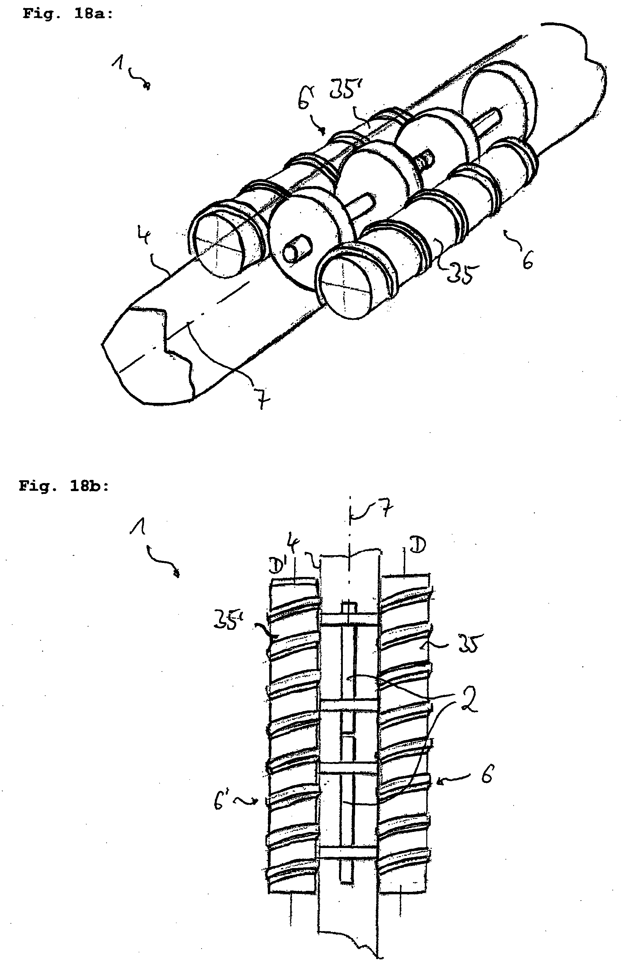

Das in den Figuren 18a und 18b dargestellte Ausführungsbeispiel zeigt zwei Antriebsschnecken 35, 35' mit jeweiligen Drehachsen D, D', welche parallel zur Förderkanalachse 7 verlaufen. Auch hier kann die Synchronisation der beiden Antriebsschnecken 35, 35' über ein hier nicht dargestelltes Zahnradgetriebe erfolgen.

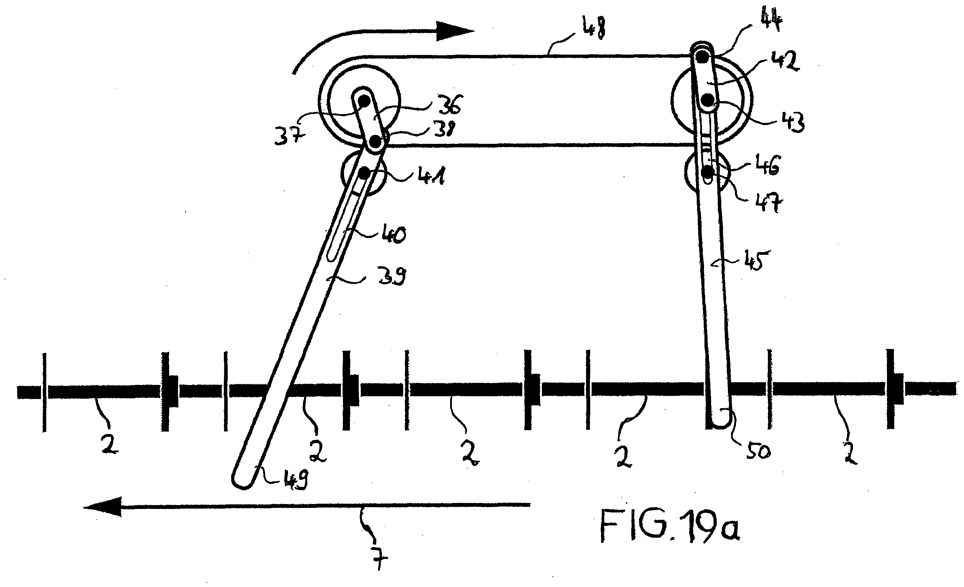

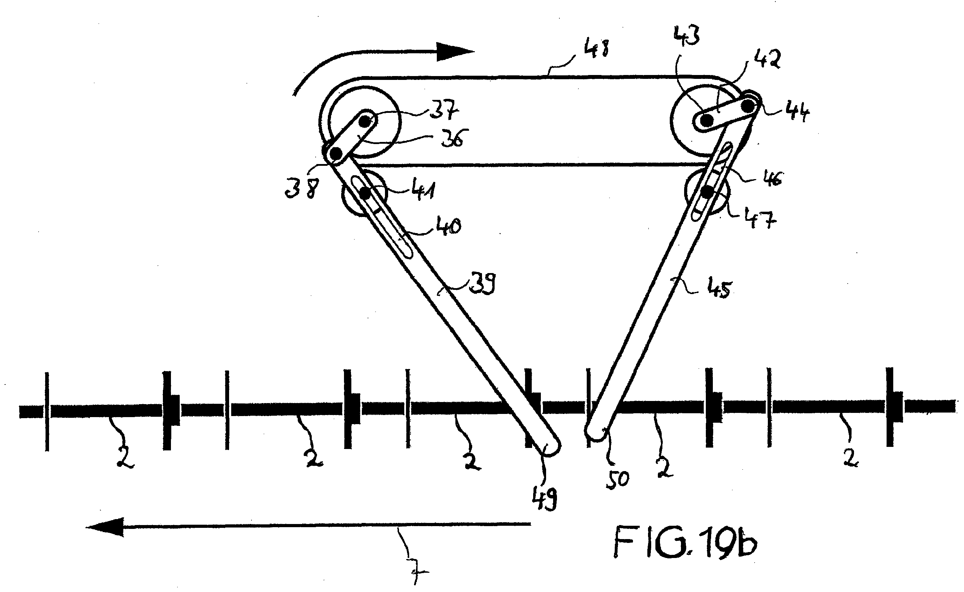

In den Figuren 19a und 19b ist ein als Viergelenkantrieb ausgebildeter Antrieb 4 dargestellt. Ein erstes Ende eines ersten Hebels 36 ist an einer ersten Antriebswelle 37 befestigt, während ein zweites Ende des ersten Hebels 36 über ein Gelenk 38 mit einem ersten Ende eines zweiten Hebels 39 drehbar verbunden ist. Der zweite Hebel 39 enthält einen Schlitz 40, in den ein Stift 41 eingreift, wodurch eine Führung des zweiten Hebels 39 ermöglicht wird. Des Weiteren ist ein erstes Ende eines dritten Hebels 42 an einer zweiten Antriebswelle 43 befestigt, während ein zweites Ende des dritten Hebels 42 über ein Gelenk 44 mit einem ersten Ende eines vierten Hebels 45 drehbar verbunden ist. Der vierte Hebel 45 enthält einen Schlitz 46, in den ein Stift 47 eingreift, wodurch eine Führung des vierten Hebels 45 ermöglicht wird. Die erste Antriebswelle 37 und die zweite Antriebswelle 43 werden durch einen gemeinsamen Antriebsriemen 4 8 angetrieben, wodurch eine Synchronisation der Antriebswellen 37, 43 erreicht wird.

Die Figuren 19a und 19b zeigen den Antrieb 6 zu zwei verschiedenen Zeitpunkten. Der Antrieb 6 ist derart ausgebildet und angeordnet, dass abschnittsweise mittels eines zweiten Endes 4 9 des zweiten Hebels 39 und eines zweiten Endes 50 des vierten Hebels 45 eine Kraft parallel zur Förderkanalachse 7 auf Mitnehmer 2 ausübbar ist, wenn sich der Antrieb 6 durch Bewegung des Antriebsriemens 48 bewegt. Zudem ist der Antrieb 6 derart ausgebildet und angeordnet, dass das zweite Ende 49 des zweiten Hebels 39 so lange eine Kraft auf einen ersten Mitnehmer 2 ausübt, bis das zweite Ende 50 des vierten Hebels 45 beginnt, eine Kraft auf einen zweiten Mitnehmer 2 auszuüben und umgekehrt. Der Antriebsabschnitt hat in diesem Ausführungsbeispiel die Länge eines Mitnehmers 2.

Alternativ zu dem in den Figuren 19a und 19b dargestellten Ausführungsbeispiel kann die Bewegung von Hebeln auch über mindestens eine Kulisse, bevorzugt über mindestens zwei Kulissen, gesteuert werden, die entweder die Hebel mit senkrecht beweglichen Mitnehmerbolzen direkt über den Mitnehmern führt oder indirekt im Antrieb platziert ist.

Zum Beispiel auch auf Grundlage der oben bereits erfolgten grundsätzlichen Erläuterungen, allgemeinen Definitionen und Merkmale, sowie der Erläuterungen zu den Zeichnungen geht die vorliegende Erfindung von dem Grundgedanken aus, dass Schüttgut in einem Förderkanal, z.B. einem Förderrohr, durch Förderelemente gefördert wird, die in dem Förderkanal in Förderrichtung geschoben bzw. gedrückt werden und dabei das Schüttgut durch den Förderkanal bewegen. Bei den Förderelementen handelt es sich um separate Einzelkörper bzw. (Schüttgut-)Mitnehmer, die während der Schüttgutförderung in dem Förderkanal (nur) kraftschlüssig miteinander in Verbindung stehen. Zum Beispiel kann hierbei in Abschnitten des Förderkanals, an denen sich keine mechanische Antriebseinrichtung befindet, ein sich in dem Förderkanal in Förderrichtung bewegendes Förderelement derart konfiguriert sein, dass es ein vor diesem sich befindendes Förderelement durch den Förderkanal schiebt bzw. drückt.

Das grundlegende Konzept, bei dem der Druck von einem separaten Einzelkörper als Förderelement auf das in Förderrichtung nächste Förderelement übertragen wird, zeichnet sich gegenüber bekannten Rohrkettenförderern durch seine verbesserte Energieeffizienz, erhöhte Fördergeschwindigkeit und -leistung, bessere Hygiene und schonendere Förderung des Schüttguts aus. Hierbei wird die erhöhte Energieeffizienz z.B. dadurch erreicht, dass im Vergleich zu Rohrkettenförderern sehr reibungsarm transportiert wird. Zudem kann aufgrund der besonderen Konfiguration der Förderelemente lediglich eine Antriebseinrichtung nötig sein, die insbesondere in einem ersten Abschnitt des Förderkanals vorgesehen ist und somit nicht mit dem Schüttgut in Verbindung kommt, das erst in einem zweiten Abschnitt des Förderkanals in diesen zugeführt wird. Zusätzlich können mit dem erfindungsgemäßen Konzept ein Förderelement und eine Fördereinrichtung bereitgestellt werden, die für die Förderung verschiedenster Schüttgüter, wie Reis, Mehl, Körner, Mais und Weizen eingesetzt werden können. Zum Beispiel wurden bisher für Reis Rohrkettenförderer, für Mehl Kübelförderer und für Körner Becherfördersysteme eingesetzt, jedoch scheiden zumindest für den Reistransport aufgrund der Explosionsschutzproblematik, der Unfallgefahr aufgrund von Quetsch- und Scherstellen und aus Platz- und Kostengründen aus. Auf der anderen Seite konnten die Rohrkettenförderer zwar die Anforderungen für Reisanwendungen einigermaßen abdecken, jedoch scheidet ein Rohrkettenförderer bei Mehl aus Hygienegründen und bei Korn aus Gründen der Förderleistung aus. Mit der vorliegenden Erfindung können all diese Schüttgüter einfach und problemlos, hygienisch und hocheffizient gefördert werden.

Die Erfindung löst die oben beschriebenen Aufgaben mit den Merkmalen der Patentansprüche.

Hierzu betrifft die vorliegende Erfindung ein Förderelement, insbesondere zur Verwendung in einem der oben und/oder im Folgenden beschriebenen Verfahren und/oder in einer der oben und/oder im Folgenden beschriebenen Fördereinrichtungen, und eine Fördereinrichtung zum Fördern von Schüttgut.

Ein erfindungsgemäßes Förderelement weist ein Scheibenelement (z.B. ein "zweites Flächenelement" wie oben beschrieben), z.B. als Räumerscheibe, mit einer Oberseite ("Mitnehmerfläche"), einer Unterseite und einer Seitenfläche entlang des Umfangs des Scheibenelements und einen Schaft ("Strebe") auf, der z.B. an seinem oberen Ende (oberer Endbereich) einen Schaftkopf, insbesondere einen Kugel- oder Kalottenkopf, hat und dann z.B. an seinem unteren Ende (unterer Endbereich) mit der Oberseite des Scheibenelements verbunden ist. Zum Beispiel kann die Oberseite des Scheibenelements mittig mit dem unteren Ende des Schaftes verbunden sein. Das Förderelement weist eine Einrichtung zur Schaftkopfaufnahme, insbesondere eine Kugelkopfaufnahme oder Kalottenkopfaufnahme, z.B. an der Unterseite des Scheibenelements auf. In einer Ausführungsform kann die Schaftkopfaufnahme am Schaft selbst vorgesehen sein. Zum Beispiel kann in dem Fall, in dem das untere Ende des Schaftes den Schaftkopf aufweist, an dem oberen Ende des Schaftes die Schaftkopfaufnahme vorgesehen sein. Erfindungsgemäß ist die Seitenfläche des Scheibenelements zumindest abschnittsweise gegenüber der Längsachse des Schafts geneigt.

Die Längsachse des Schafts kann zum Beispiel durch den Mittelpunkt der Oberseite des Scheibenelements verlaufen. Insbesondere ist der Schaft senkrecht zum Scheibenelement angeordnet. Das Scheibenelement kann hierbei als Räumerscheibe des Förderelements dienen, die das Schüttgut durch den Förderkanal schiebt und insbesondere geeignet ist, die Schubbewegung einer Antriebseinrichtung (z.B. mit Mitnehmerbolzen wie oben beschrieben) aufzunehmen. Der Schaft des Förderelements hat die Aufgabe, die von der Antriebseinrichtung auf die Räumerscheibe eingeleiteten Kräfte zum Schaftkopf und somit weiter auf ein davorliegendes Förderelement in dem Förderkanal zu übertragen, um auf diese Weise das Schüttgut durch den Förderkanal zu drücken/schieben.

In einer Ausführungsform kann das Scheibenelement eine radialsymmetrische, in sich gebogene Scheibe sein. In diesem Fall können die Oberseite und die Unterseite des Scheibenelements ebenfalls gebogen sein, z.B. die Oberseite des Scheibenelements derart, dass der Abstand in Längsrichtung zwischen dem Mittelpunkt der Oberseite und dem Schaftkopf größer ist als der Abstand in Längsrichtung zwischen dem (maximalen) Umfang der Oberseite des Scheibenelements und dem Schaftkopf. Die Seitenfläche des Scheibenelements erstreckt sich entlang des (maximalen) Umfangs des Scheibenelements und verbindet insbesondere die Oberseite mit der Unterseite des Scheibenelements über eine obere und eine untere Umfangskante.

Erfindungsgemäß ist in einem Längsschnitt des Förderelements durch die Längsachse des Schafts die Seitenfläche des Scheibenelements zumindest abschnittsweise gegenüber der Längsachse des Schafts (in Richtung des Mittelpunkts der Oberseite des Scheibenelements) geneigt. Insbesondere weisen Abschnitte der Seitenfläche an der oberen Umfangskante eine derartige Neigung gegenüber der Längsachse des Schafts auf. Durch die zumindest abschnittsweise Neigung der Seitenfläche gegenüber der Längsachse des Schafts kann eine Beschädigung des Scheibenelements verringert werden, wenn diese z.B. auf Rohrstöße im Förderkanal trifft.

In einer Ausführungsform ist ein geneigter Abschnitt der Seitenfläche des Scheibenelements als Seitenfläche einer Zentrierleiste des Scheibenelements oder als Seitenflächen von Zentriernocken ausgebildet. Eine Zentrierleiste verläuft z.B. entlang des Umfangs der Oberseite des Scheibenelements und verhindert nicht nur Beschädigungen des Förderelements, insbesondere der Räumerscheibe, sondern kann zusätzlich dazu dienen, das Förderelement im Förderkanalquerschnitt optimal auszurichten und insbesondere einem Verkippen des Förderelements beim Auftreffen auf Rohrstöße entgegenzuwirken. Als Alternative zu einer Zentrierleiste können z.B. Zentriernocken entlang des Umfangs der Oberseite des Scheibenelements vorgesehen sein.

In einer Ausführungsform ist die Kante des Scheibenelements, die sich zwischen der Seitenfläche und der Oberseite des Scheibenelements befindet, also die obere Umfangskante der Seitenfläche, stärker abgerundet als die untere Umfangskante (das ist die Kante der Seitenfläche, die sich zwischen der Seitenfläche und der Unterseite des Scheibenelements befindet), z.B. um Beschädigungen der Räumerscheibe beim Auftreffen auf Rohrstöße zu verhindern. Eine Kante ist hierbei dann stärker abgerundet, wenn der Radius des Bogenabschnitts, der die abgerundete obere Umfangskante in einem Längsschnitt des Förderelements durch die Längsachse des Schafts darstellt, größer ist als der Radius des Bogenabschnitts des unteren Umfangskante. Ein Längsschnitt eines Förderelements durch die Längsachse des Schafts ist hierbei z.B. in Fig. 1 gezeigt (in einer beispielhaften Ausführungsform mit Zentriernocken).

Erfindungsgemäß weist das Förderelement eine Einrichtung zur Schaftkopfaufnahme auf. In einer Ausführungsform kann das Scheibenelement z.B. an seiner Unterseite eine Einbuchtung/Ausnehmung aufweisen, in die ein Schaftkopf eines Schafts eines nachfolgenden Förderelements aufgenommen werden kann. Die Einbuchtung kann in diesem Fall komplementär zum Schaftkopfende ausgebildet sein, wobei der Radius der Einbuchtung aus praktischen Gründen etwas größer (z.B. um 1 mm bis 15 mm, insbesondere 2 mm bis 8 mm, beispielsweise ca. 3 mm bis 5 mm größer) als der Radius des Schaftkopfes sein kann, damit das Schaftkopfende eines nachfolgenden Förderelements leichter von der Schaftkopfaufnahme aufgenommen werden kann. In einer Ausführungsform kann z.B. an der Unterseite des Scheibenelements das Schaftkopfende vorgesehen sein, und das andere Ende des Schaftes weist die z.B. komplementär zu dem Schaftkopf ausgebildete Schaftkopfaufnahme auf, so dass ein Schaftkopf an der Unterseite des Scheibenelements des Förderelements von der Schaftkopfaufnahme eines nachfolgenden Förderelements aufgenommen werden kann.

In einer Ausführungsform kann sich der Schaft mittig durch das Scheibenelement erstrecken und an der Unterseite des Scheibenelements eine Schaftkopfaufnahme oder einen Schaftkopf bilden. In beiden Fällen kann z.B. der Durchmesser des Schafts etwas größer (z.B. 2 mm bis 30 mm, insbesondere 4 mm bis 16 mm, beispielsweise 6 mm bis 10 mm größer) sein als der Durchmesser des Schaftkopfendes, so dass die Schaftkopfaufnahme am Schaft eine entsprechend passende Einbuchtung (in den Größen wie oben definiert) für ein Schaftkopfende eines nachfolgenden bzw. davorlaufenden Förderelements aufweist.

In einer Ausführungsform ist das Förderelement komplett aus Kunststoff geformt und insbesondere einstückig ausgebildet (z.B. durch ein Spritzgussverfahren). Für bestimmte Schüttgüter kann es allerdings von Vorteil sein, schwerere formstabilere Förderelemente zu verwenden, die dann z.B. einen Metallkern und/oder einen Kern aus einer metallischen Legierung wie z.B. Stahl aufweisen. In einer Ausführungsform ist der Kern z.B. kein Magnet. Der Kern kann sich z.B. nur in dem Schaft oder in dem Schaft und der Räumerscheibe befinden. Die Außenflächen dieser Ausführungsform, insbesondere sämtliche Bereiche des Förderelements um den Kern herum, können dann wieder aus Kunststoff geformt und insbesondere einstückig ausgebildet sein. Zum Beispiel kann ein derartiges Förderelement dadurch hergestellt werden, dass der Kern in eine entsprechende Spritzgussform gelegt wird, wobei die Spritzgussform die Form des herzustellenden Förderelements hat, und dann das entsprechende Spritzgussverfahren durchgeführt wird, so dass der Kern sich im Endprodukt innerhalb des Förderelements befindet und die Außenflächen des Förderelements einstückig ausgebildet sind.

In einer Ausführungsform weist das Scheibenelement eine Verschleißanzeige auf, die z.B. auf der Seitenfläche des Scheibenelements und/oder in dem Scheibenelement in einem bestimmten Abstand zu den Oberflächen des Scheibenelements angeordnet ist. Bei entsprechendem Verschleiß an der Seitenfläche oder der Oberseite des Scheibenelements, mit der das Schüttgut durch den Förderkanal transportiert wird, können z.B. bei einer Verschleißanzeige, die sich in dem Scheibenelement befindet, Markierungen sichtbar werden, an denen sich der Grad des Verschleißes z.B. durch einen entsprechenden Farbverlauf von außen nach innen in dem Scheibenelement erkennen lässt. Alternativ oder zusätzlich kann ein Verschleißanzeigekörper mit einer bestimmten Form (z.B. zweiseitiger Pfeil) in dem Scheibenelement integriert sein und insbesondere eine andere Farbe als das ihn umgebende Material aufweisen. In diesem Fall kann der Grad des Verschleißes durch das Sichtbarwerden bestimmter Abschnitte des Verschleißanzeigekörpers erkannt werden (z.B. anfangs lediglich die Pfeilspitze von vorne betrachtet, also ein kleiner Punkt, der im Laufe des Betriebs aufgrund des Verschleißes größer wird). Alternativ oder zusätzlich kann eine Verschleißanzeige durch eine Markierung außen auf der Seitenfläche des Förderelements realisiert werden, die sich z.B. teilweise in das Innere des Scheibenelements um eine wohldefinierte Länge erstreckt. Sollte während des Betriebs die Markierung nicht mehr erkennbar sein, kann somit z.B. bestimmt werden, dass das zu sehr verschlissene Förderelement ausgetauscht werden muss.

In einer Ausführungsform weist das Förderelement ein Führungsscheibenelement ("erstes Flächenelement" wie oben beschrieben) auf, das im Wesentlichen parallel zum Scheibenelement in Richtung des Schaftkopfs des Schafts angeordnet ist. Insbesondere verläuft der Schaft durch den Mittelpunkt der Oberseite des Führungsscheibenelements. Das Führungsscheibenelement ist insbesondere mit Öffnungen/Aussparungen versehen, so dass das Führungsscheibenelement durchlässig für Schüttgut ist. Auf diese Weise kann das Fördervolumen erhöht werden und das Schüttgut wird in Förderkanalbögen nicht gequetscht. Zudem kann das Führungsscheibenelement derart konfiguriert sein, dass es das Förderelement in dem Förderkanal so führt, dass nach einem Verlassen des Förderelements aus dem kraftschlüssigen Förderelementeverbund davorliegender und nachfolgender Förderelemente wieder in die Schaftkopfaufnahmeeinrichtung des davorliegenden Förderelements findet und somit den Verbund wieder herstellt. Ähnlich wie das Scheibenelement kann auch das Führungsscheibenelement eine radialsymmetrische Form haben und insbesondere eine in sich gebogene Scheibe sein. Das Führungsscheibenelement kann in einer Ausführungsform gegenüber dem Scheibenelement geneigt sein und/oder in sich flexibel gestaltet und/oder flexibel an dem Schaft befestigt sein. Auf diese Weise können z.B. Druckunterschiede auf das Führungsscheibenelement beim Schüttguttransport durch einen Bogenabschnitt im Förderrohr ausgeglichen werden: Das Führungsscheibenelement kann z.B. derart konfiguriert sein, dass es z.B. zu einer Seite hin ausgelenkt/gekippt wird, wenn z.B. das durch das Förderrohr zu schiebende Schüttgut an einer Seite (z.B. der Innenseite eines Rohrbogens) dichter ist als an einer anderen Seite (z.B. der Außenseite des Rohrbogens).

In einer Ausführungsform ist der Abstand in Längsrichtung zwischen der Räumerscheibe und der Führungsscheibe eines Förderelements größer als die halbe Länge des Förderelements in Längsrichtung. Mit einer derartigen Anordnung der Scheibenelemente, bei der das Führungsscheibenelement nahe dem Schaftkopf vorgesehen ist, kann das Führungsscheibenelement beim Verlassen des Verbundes den Kraftschluss zu dem davorlaufenden Förderelement durch Zentrieren des Schaftkopfes innerhalb des Querschnitts des Förderkanals schnell wieder herstellen. In einer Ausführungsform hat das Förderelement mindestens eine Kamera und/oder mindestens einen Sensor (z.B. einen Temperatursensor und/oder einen Feuchtesensor) und/oder mindestens eine Beleuchtungseinrichtung, die den Bereich, den z.B. die Kamera erfassen kann, ausleuchtet. Zum Beispiel kann das an dem Förderelement angeordnete System aus Kameras und Beleuchtungseinrichtungen zur Inspektion des Förderrohrs, insbesondere in nicht leicht zugänglichen Abschnitten, verwendet werden. Hierbei kann das Förderelement z.B. jeweils eine Kamera und eine Beleuchtungseinrichtung an seinem in Förderrichtung vorderen Ende und an seinem in Förderrichtung hinteren Ende aufweisen. Zum Beispiel können 2 oder 4 oder 6 Kameras/Sensoren und/oder eine entsprechende Anzahl Beleuchtungseinrichtungen an dem Schaft des Förderelements angeordnet sein, um z.B. die Förderrohrinnenwand auszuleuchten und zu inspizieren. Eventuelle Fehlfunktionen oder Lecks können auf diese Weise schnell lokalisiert, identifiziert und somit gezielt behoben bzw. ausgebessert werden, ohne dass der gesamte Förderkanal auseinandergebaut werden muss. Das Förderelement kann z.B. in die Fördereinrichtung im laufenden Betrieb eingesetzt werden und wird z.B. eine Runde durch den Förderkanal transportiert, wobei das Förderelement Daten aufzeichnet, anhand derer dann der Zustand bezüglich Verschleiß (durch z.B. Verschleissmarker in den kritischen Stellen des Förderkanals), Hygiene, Schmutzstellen, Stossstellen der Rohre, Produkteinlauf und Produktauslauf analysiert werden können. Alternativ oder zusätzlich kann das Förderelement einen oder mehrere Sensoren wie einen Ultraschallprüfkopf aufweisen, z.B. um die Rohrwandstärke zu messen und auf diese Weise den Zustand der Förderrohrs zu kontrollieren.

In einer Ausführungsform hat das Förderelement eine Reinigungsvorrichtung, die insbesondere am Schaft des Förderelements angeordnet ist. Die Reinigungsvorrichtung kann hierbei eine oder mehrere Bürsten oder Faserbesätze zur mechanischen Reinigung der Innenrohre der Fördereinrichtung sein. Das Förderelement mit der Reinigungsvorrichtung kann im laufenden Betrieb in die Fördereinrichtung eingesetzt werden und wird dann eine oder mehrere Runden durch den Förderkanal transportiert, um den Förderkanal zu reinigen. Ein Vorteil besteht darin, dass das Förderelement nach der Reinigung der Innenrohre aus der Fördereinrichtung ohne Aufwand entfernt werden und dann separat dekontaminiert werden kann. Die Reinigungsvorrichtung kann z.B. abhängig vom zu fördernden Schüttgut z.B. Kunststoffbürsten, Stahlbürsten, Edelstahlbürsten, Messingbürsten, Mikrofasergewebe, Gummi, Filz, Wolle, Baumwolle usw. umfassen.

In einer Ausführungsform ist das Förderelement mit einem Label zur automatischen Identifizierung und/oder Lokalisierung versehen. Eine erfindungsgemäße Fördereinrichtung weist hierbei z.B. ein Lesegerät zum Auslesen des Labels auf. Insbesondere kann das Label ein RFID-Transponder sein mit einem Code, der von dem Lesegerät z.B. an einer oder mehreren Stellen in/an dem Förderkanal, z.B. durch ein Sichtfenster oder eine andere Öffnung, ausgelesen werden kann. Auf diese Weise können z.B. Start- oder Stoppvorgänge gesteuert werden, z.B. kann die Fördereinrichtung derart konfiguriert sein, dass sie (nur) dann startet, wenn ein (bestimmtes) Förderelement an einer bestimmten Stelle identifiziert wurde, und/oder dann stoppt, sobald ein (bestimmtes) Förderelement an eine bestimmte Stelle geschoben wurde. Zum Beispiel können somit eine wohldefinierte Anzahl von Zyklen in der Fördereinrichtung vorbestimmt werden und/oder das Fördern des Schüttguts gestoppt werden, sobald sich ein nicht identifizierbares Förderelement in dem Förderkanal befindet.

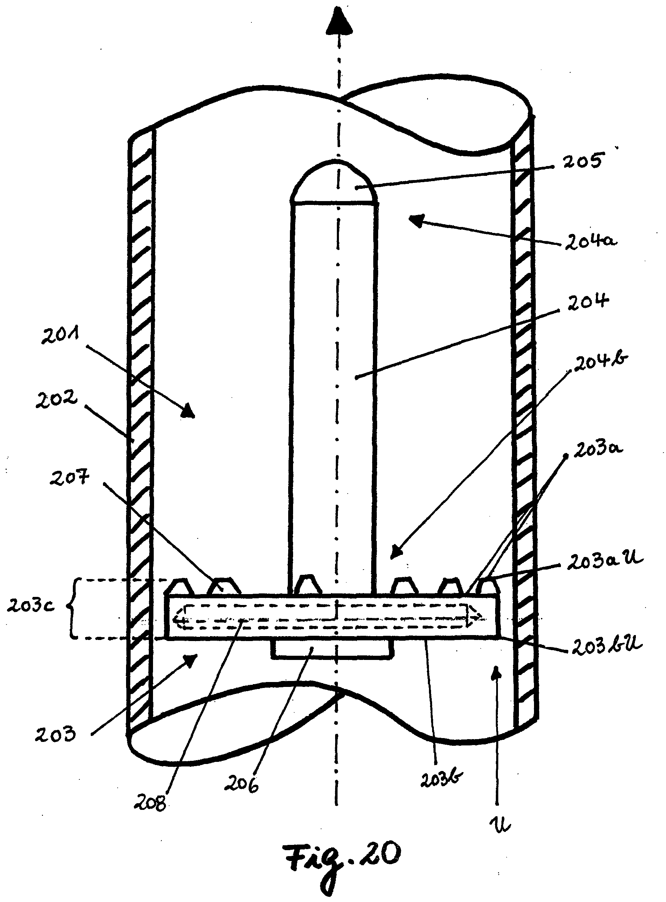

Weitere Merkmale und Vorteile der Erfindung werden nachfolgend anhand von Ausführungsbeispielen im Zusammenhang mit Figuren 20 bis 25 zum besseren Verständnis näher erläutert.

Ähnlich zu den Ausführungsformen in Figuren 5 bis 9 zeigen Figuren 20 bis 25 Ansichten weiterer Ausführungsformen bestimmter Förderelemente.

Figur 20 ist eine schematische Darstellung eines Längsschnitts des Förderelements 201 durch die Längsachse des Schafts 204 des Förderelements 201. Das Förderelement 201 hat ein Scheibenelement 203 mit einer Oberseite 203a, einer Unterseite 203b und einer Seitenfläche 203c entlang des (maximalen) Umfangs U des Scheibenelements 203. Die Seitenfläche 203c verbindet die Oberseite 203a mit der Unterseite 203b des Scheibenelements 203 über eine obere Umfangskante 203aU und eine untere Umfangskante 203bU. Der Schaft 204 weist an seinem oberen Ende 204a (das in Förderrichtung vordere Ende des Schaftes, wobei die Förderrichtung in der Längsachse des Schaftes oben mit einem Pfeil bzw. einer Pfeilspitze angedeutet ist) einen Schaftkopf, in diesem Beispiel einen Kugelkopf, 205 auf und ist an seinem unteren Ende 204b (das in Förderrichtung hintere Ende des Schaftes) mit der Oberseite 203a des Scheibenelements 203 mittig verbunden. Das Förderelement 201 hat zudem eine Einrichtung 206 zur Schaftkopfaufnahme an der Unterseite 203b des Scheibenelements 203. Die Seitenfläche 203c des Scheibenelements 203 ist zumindest abschnittsweise gegenüber der Längsachse 204c des Schafts 204 geneigt, in der in Figur 20 dargestellten Ausführungsform betreffen diese Abschnitte der Seitenfläche 203c die Seitenflächen der Zentriernocken 207. Für ein besseres Verständnis sind in Figur 20 nicht nur die in dem Längsschnitt sichtbaren (äußeren) Zentriernocken, sondern weitere Zentriernocken eingezeichnet, die in einem gleichmäßigen Abstand voneinander in Umfangsrichtung angeordnet sind. Das Förderelement 201 kann zudem eine Verschleißanzeige 208 haben, z.B. in und/oder an dem Scheibenelement 203.

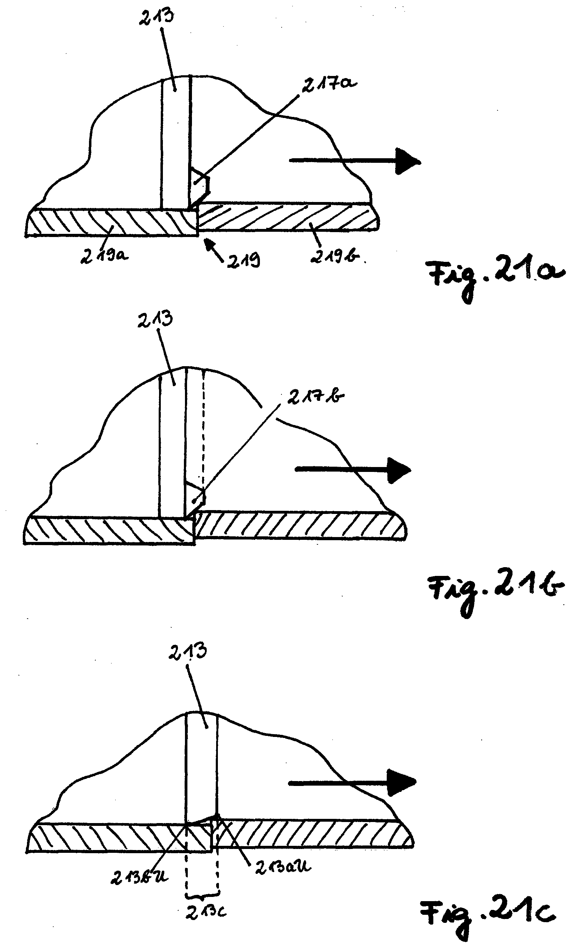

Figuren 21a, 21b und 21c zeigen Detailansichten dreier Ausführungsformen eines Scheibenelements 213.

In der ersten Ausführungsform gemäß Figur 21a hat das Scheibenelement 213 Zentriernocken 217a, die beim Transport des Förderelements in dem Förderkanal in Förderrichtung (siehe Pfeil) das Scheibenelement 213 vor Stoßkanten 219 zwischen zwei Rohrelementen 219a und 219b schützen. In der zweiten Ausführungsform gemäß Figur 21b hat das Scheibenelement 213 eine Zentrierleiste 217b, die sich entlang des gesamten Umfangs des Scheibenelements 213 erstreckt (in Fig. 21b durch die gestrichelte Linie in Abgrenzung zu den Zentriernocken in Fig. 21a angedeutet). In der dritten Ausführungsform gemäß Figur 21c ist die Seitenfläche 213c von der unteren Umfangskante 213bU bis zur oberen Umfangskante 213aU geneigt als Schutz vor den oben beschriebenen Stoßkanten.

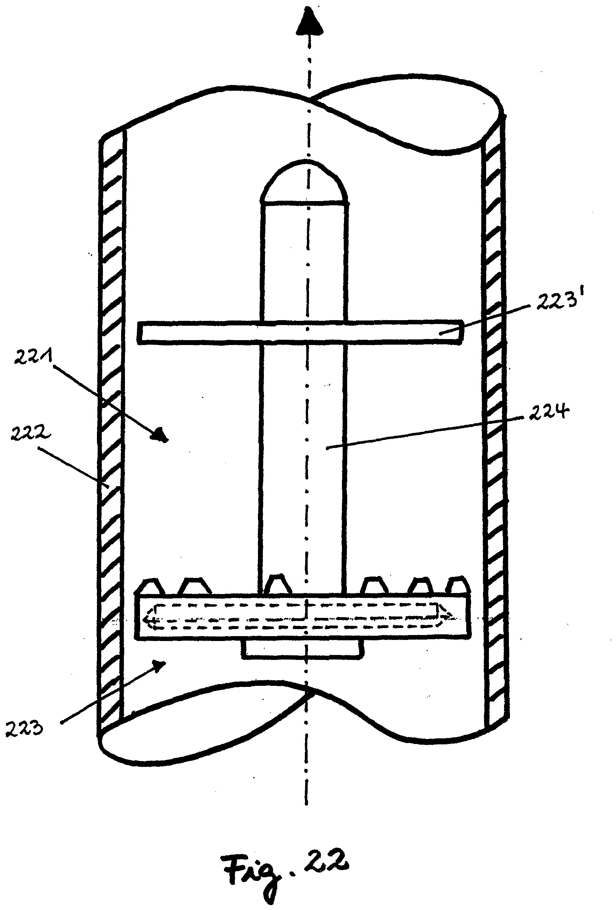

Figur 22 ist eine schematische Darstellung eines Längsschnitts durch ein Förderelement 221 in einem Förderkanal 222 und weist insbesondere die gleichen Merkmale auf wie Figur 20. Zusätzlich ist an dem Schaft 224 ein Führungsscheibenelement 223' parallel zu dem Scheibenelement 223 angeordnet. Das Führungsscheibenelement 223' kann Öffnungen/Aussparungen aufweisen (nicht dargestellt), um das Fördervolumen zu steigern und Quetschungen des Schüttguts zu vermeiden.

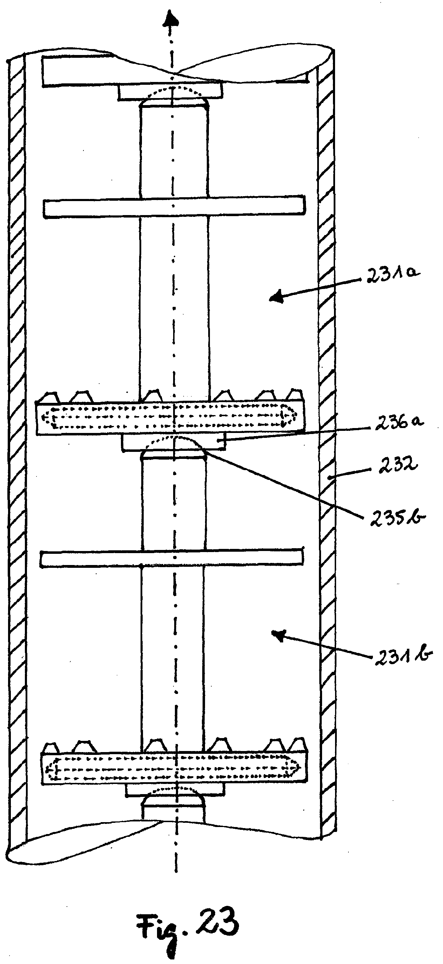

In Figur 23 sind beispielhaft zwei Förderelemente 231a und 231b in einem Förderkanal 232 dargestellt, die sich im Verbund befinden, d.h. dass der Kugelkopf 235b des Förderelements 231b in die Kugelkopfaufnahmeeinrichtung 236a des Förderelements 231a eingreift. Befinden sich die Förderelemente 231a und 231b während des Fördervorgangs in dem dargestellten Verbund, werden die Förderelemente dadurch, dass das jeweils in Förderrichtung (siehe Pfeil) hintere Förderelement 231b auf das davorlaufende Förderelement 231a drückt, durch den Förderkanal 232 geschoben. Auf diese Weise kann Schüttgut von den Förderelementen 231a, 231b in dem Förderkanal 232 transportiert werden.

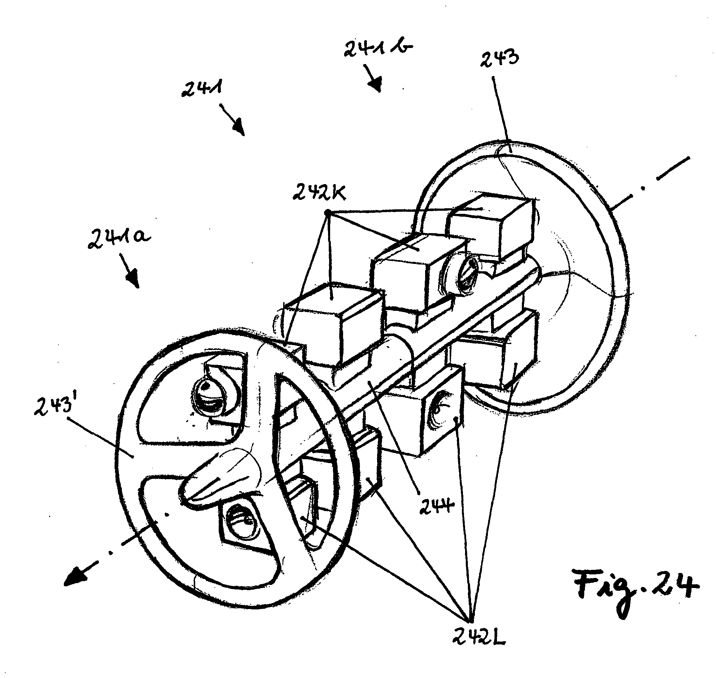

Figur 24 zeigt eine perspektivische Ansicht eines als Inspektionselement ausgebildeten Förderelements 241 mit mehreren Kameras 242K und mehreren Beleuchtungseinrichtungen 242L, die die Bereiche, die die Kameras erfassen können, ausleuchten, um z.B. Förderrohre einer Inspektion zu unterziehen. Alternativ oder zusätzlich können ein oder mehrere Sensoren z.B. zur Temperaturmessung und/oder Feuchtemessung vorgesehen sein. Das Förderelement 241 hat in der dargestellten Ausführungsform z.B. jeweils eine Kamera 242K und eine Beleuchtungseinrichtung 242L an seinem in Förderrichtung (siehe Pfeil) vorderen Ende 241a und an seinem in Förderrichtung hinteren Ende 241b und zusätzlich zwei weitere Kameras 242K mit entsprechenden Beleuchtungseinrichtungen 242L, die an dem Schaft 244 des Förderelements 241 angeordnet sind, um z.B. senkrecht zur Längsachse des Schafts 244 Innenrohrabschnitte zu inspizieren. In der dargestellten Ausführungsform kann die hintere Scheibe 243 ähnlich wie die vordere Scheibe 243' Öffnungen aufweisen, in diesem Fall um eine Inspektion entlang der Längsachse des Schafts 244 durchführen zu können.

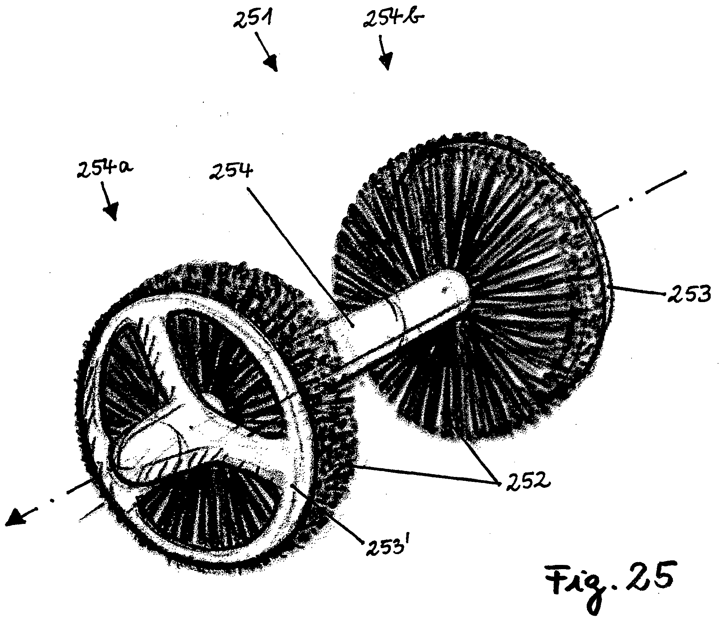

Figur 25 zeigt eine perspektivische Ansicht eines als Reinigungselement ausgebildeten Förderelements 251 mit mindestens einer Reinigungsvorrichtung 252, die z.B. an dem vorderen und/oder hinteren Ende 254a, 254b des Schafts 254 des Förderelements 251 angeordnet ist und in Förderrichtung (siehe Pfeil) nach vorne durch die Führungsscheibe 253', und in Förderrichtung nach hinten durch die Räumerscheibe 253 gegen ein ungewolltes Abrutschen von dem Schaft 254 gesichert sind.

Die vorliegende Erfindung stellt somit ein Förderelement und eine Fördereinrichtung bereit, mit denen sich die Förderleistung bei gleichzeitiger Energieeinsparung erhöhen lässt. Zudem können mit dem vorliegenden Konzept Förderhöhen von etwa 60 m erreicht werden, so dass die Fördereinrichtung durch effektivere Nutzung in allen Dimensionen des Raums bei gleichbleibender Förderleistung insgesamt weniger Grundfläche benötigt und zudem individuell gestaltet werden kann. Dadurch dass die Förderung des Schüttguts in dem Förderrohr mittels separater Einzelkörper (Förderelemente, Mitnehmer) erfolgt, die das Schüttgut durch das Förderrohr schieben bzw. drücken, findet eine nur geringe relative Bewegung des Schüttguts statt, was eine Entmischung und die innere Reibung reduziert. Zudem ist die Fördereinrichtung einfach in Aufbau, Montage und Wartung (einzelne Förderelemente leicht zu ersetzen, Rohr mit besonderen Förderelementen während des Betriebs der Fördereinrichtung problemlos zu inspizieren) und ist zudem leicht zu reinigen, da sich Rückstände in dem Förderrohr nicht ansammeln können, Schüttgut nicht verschleppt werden kann und eine Reinigung mit hierfür vorgesehenen, besonderen Förderelementen während des Betriebs der Fördereinrichtung erfolgen kann. Zudem ist nur ein Antrieb in einem bestimmten Abschnitt des Förderrohrs erforderlich, so dass - bei räumlicher Trennung des Antriebs von der Schüttgutzuführeinrichtung - der Antrieb mit dem Schüttgut nicht in Berührung kommt (hohe Sanitation).

## Patentansprüche

1. Förderelement (201) zur Förderung von Schüttgut, umfassend
ein Scheibenelement (203) mit einer Oberseite (203a), einer Unterseite (203b) und einer Seitenfläche (203c) entlang des Umfangs des Scheibenelements, und
einen Schaft (204), der an seinem oberen Ende (204a) oder an seinem unteren Ende einen Schaftkopf (205) aufweist und an seinem unteren Ende (204b) mit der Oberseite (203a) des Scheibenelements verbunden ist,
wobei das Förderelement eine Einrichtung zur Schaftkopfaufnahme (206) an der Unterseite (203b) des Scheibenelements oder an dem Schaft aufweist, und
wobei die Seitenfläche (203c) des Scheibenelements zumindest abschnittsweise gegenüber der Längsachse des Schafts (204) geneigt ist,
**dadurch gekennzeichnet, dass** der Schaft sich durch das Scheibenelement bis zu dessen Unterseite erstreckt.

2. Förderelement nach Anspruch 1, wobei geneigte Abschnitte der Seitenfläche des Scheibenelements als Seitenflächen von Zentriernocken (207; 217a) des Scheibenelements ausgebildet sind.

3. Förderelement nach Anspruch 1 oder 2, wobei die Kante der Seitenfläche des Scheibenelements zur Oberseite des Scheibenelements stärker abgerundet ist als die Kante der Seitenfläche zur Unterseite des Scheibenelements.

4. Förderelement nach einem der Ansprüche 1 bis 3, wobei der Schaft an der Unterseite des Scheibenelements als Einrichtung zur Schaftkopfaufnahme ausgebildet ist.

5. Förderelement nach einem der Ansprüche 1 bis 4, wobei mindestens die Außenflächen des Förderelements aus Kunststoff geformt sind.

6. Förderelement nach einem der Ansprüche 1 bis 5, wobei die Außenflächen des Förderelements einstückig ausgebildet sind.

7. Förderelement nach einem der Ansprüche 1 bis 6, wobei der Schaft einen Metallkern aufweist, der insbesondere kein Magnet ist.

8. Förderelement nach einem der Ansprüche 1 bis 7, wobei das Scheibenelement eine Verschleißanzeige aufweist.

9. Förderelement nach Anspruch 8, wobei die Verschleißanzeige (208) auf der Seitenfläche des Scheibenelements und/oder in dem Scheibenelement angeordnet ist.

10. Förderelement nach einem der Ansprüche 1 bis 9 mit einem Führungsscheibenelement (223'), das im Wesentlichen parallel zum Scheibenelement (203; 223) in Richtung des Schaftkopfs (205) des Schafts (204) angeordnet ist.

11. Förderelement nach Anspruch 10, wobei das Führungsscheibenelement Aussparungen zum Durchlassen von Schüttgut aufweist.

12. Förderelement nach einem der Ansprüche 1 bis 11, mit mindestens einer Reinigungsvorrichtung.

13. Förderelement nach einem der Ansprüche 1 bis 12, mit mindestens einer Kamera und/oder einem Sensor und/oder einer Beleuchtungseinrichtung.

14. Förderelement nach einem der Ansprüche 1 bis 13 mit einem Label zur automatischen Identifizierung und/oder Lokalisierung des Förderelements.

15. Fördereinrichtung zum Fördern von Schüttgut mit mindestens einem Förderelement nach Anspruch 14 und einem Lesegerät zum Auslesen des Labels.

## Claims

1. A conveying element (201) for conveying bulk goods, comprising
a disk element (203) comprising an upper side (203a), a lower side (203b) and a side surface (203c) along the circumference of the disk element, and
a shank (204) which comprises at its upper end (204a) or at its lower end a shank head (205) and which is connected at its lower end (204b) to the upper side (203a) of the disk element,
wherein the conveying element comprises a shank head receiving means (206) at the lower side (203b) of the disk element or at the shank, and
wherein the side surface (203c) of the disk element is inclined at least in sections relative to the longitudinal axis of the shank (204),
**characterized in that** the shank extends through the disk element up to its lower side.

2. The conveying element according to claim 1, wherein inclined sections of the side surface of the disk element are configured as side surfaces of centering cams (207; 217a) of the disk element.

3. The conveying element according to claim 1 or 2, wherein the edge of the side surface of the disk element is rounded more towards the upper side of the disk element than the edge of the side surface towards the lower side of the disk element.

4. The conveying element according to any of claims 1 to 3, wherein the shank is configured at the lower side of the disk element as means for receiving the shank head.

5. The conveying element according to any of claims 1 to 4, wherein at least the outer surfaces of the conveying element are made of plastic.

6. The conveying element according to any of claims 1 to 5, wherein the outer surfaces of the conveying element are formed integrally.

7. The conveying element according to any of claims 1 to 6, wherein the shank comprises a metal core which is in particular no magnet.

8. The conveying element according to any of claims 1 to 7, wherein the disk element comprises a wear display.

9. The conveying element according to claim 8, wherein the wear display (208) is arranged at the side surface of the disk element and/or in the disk element.

10. The conveying element according to any of claims 1 to 9 comprising a guide disk element (223') which is arranged substantially parallel to the disk element (203; 223) in the direction of the shank head (205) of the shank (204).

11. The conveying element according to claim 10, wherein the guide disk element comprises recesses which let bulk goods go through.

12. The conveying element according to any of claims 1 to 11 comprising at least one cleaning device.

13. The conveying element according to any of claims 1 to 12 comprising at least one camera and/or one sensor and/or one lighting device.

14. The conveying element according to any of claims 1 to 13 comprising a label for automatically identifying and/or localizing the conveying element.

15. A conveying device for conveying bulk goods comprising at least one conveying element according to claim 14 and a reader for reading out the label.

## Revendications

1. Elément de transport (201) destiné au transport de matière en vrac, comprenant
un élément en forme de disque (203) présentant une face supérieure (203a), une face inférieure (203b) et une surface latérale (203c) le long de la périphérie de l'élément en forme de disque, et
un axe (204) présentant une tête d'axe (205) à son extrémité supérieure (204a) ou à son extrémité inférieure, et raccordé par son extrémité inférieure (204b) à la face supérieure (203a) de l'élément en forme de disque,
où ledit élément de transport présente un dispositif de logement (206) de tête d'axe sur la face inférieure (203b) de l'élément en forme de disque ou sur l'axe, et
où la surface latérale (203c) de l'élément en forme de disque est au moins partiellement inclinée par rapport à l'axe longitudinal de l'axe (204),
**caractérisé en ce que** l'axe s'étend au travers de l'élément en forme de disque jusqu'à la face inférieure de celui-ci.

2. Elément de transport selon la revendication 1, où les parties inclinées de la surface latérale de l'élément en forme de disque sont prévues comme surfaces latérales de cames de centrage (207 ; 217a) de l'élément en forme de disque.

3. Elément de transport selon la revendication 1 ou la revendication 2, où le bord de la surface latérale de l'élément en forme de disque avec la face supérieure de l'élément en forme de disque est plus arrondi que le bord de la surface latérale avec la face inférieure de l'élément en forme de disque.

4. Elément de transport selon l'une des revendications 1 à 3, où l'axe est prévu comme dispositif de logement de tête d'axe sur la face inférieure de l'élément en forme de disque.

5. Elément de transport selon l'une des revendications 1 à 4, où au moins les surfaces extérieures dudit élément de transport sont formées en matière plastique.

6. Elément de transport selon l'une des revendications 1 à 5, où les surfaces extérieures dudit élément de transport sont formées d'un seul tenant.

7. Elément de transport selon l'une des revendications 1 à 6, où l'axe a une âme métallique qui n'est notamment pas un aimant.

8. Elément de transport selon l'une des revendications 1 à 7, où l'élément en forme de disque présente une indication d'usure.

9. Elément de transport selon la revendication 8, où l'indication d'usure (208) est disposée sur la surface latérale de l'élément en forme de disque et/ou dans l'élément en forme de disque.

10. Elément de transport selon l'une des revendications 1 à 9, avec un élément en forme de disque de guidage (223'), disposé sensiblement parallèlement à l'élément en forme de disque (203 ; 223) vers la tête d'axe (205) de l'axe (204).

11. Elément de transport selon la revendication 10, où l'élément en forme de disque de guidage présente des ouvertures pour le passage de la matière en vrac.

12. Elément de transport selon l'une des revendications 1 à 11, avec au moins un dispositif de nettoyage.

13. Elément de transport selon l'une des revendications 1 à 12, avec au moins une caméra et/ou un capteur et/ou dispositif d'éclairage.

14. Elément de transport selon l'une des revendications 1 à 13, avec une étiquette pour l'identification et/ou la localisation automatiques dudit élément de transport.

15. Dispositif de transport destiné au transport de matière en vrac, avec au moins un élément de transport selon la revendication 14 et un lecteur pour la lecture de l'étiquette.
